# EUROPEAN PATENT APPLICATION

(11) **EP 4 580 257 A1**
(43) Date of publication of application: **02.07.2025**
(21) Application number: 22959083.1
(22) Date of filing: 21.09.2022
(51) Int. Cl.: H04W 36/04, H04W 48/00, H04W 56/00

(54) **COMMUNICATION METHOD AND APPARATUS**

(71) Applicant: Huawei Technologies Co., Ltd., Shenzhen, Guangdong 518129 (CN)
(72) Inventor: WANG, Yu, Shenzhen, Guangdong 518129 (CN); LUO, Hejia, Shenzhen, Guangdong 518129 (CN); WANG, Jun, Shenzhen, Guangdong 518129 (CN); ZHOU, Jianwei, Shenzhen, Guangdong 518129 (CN); ZHANG, Xi, Shenzhen, Guangdong 518129 (CN)
(74) Representative: Goddar, Heinz J.
(86) International application number: PCT/CN2022/120250
(87) International publication number: WO 2024/060072

(57) **Abstract**

This application discloses a communication method and apparatus. The method includes: A first cell may send a first SSB, where the first SSB is an SSB used for initial access. The first cell may further send a second SSB, where the second SSB is an SSB used for cell handover or cell reselection. According to the method, the first cell may separately send the first SSB used for initial access and the second SSB used for cell handover or cell reselection. In this way, when a terminal device needs to access the first cell, the first cell may send the first SSB; or when the terminal device needs to hand over or reselect to the first cell, the first cell may send the second SSB, so that the SSB can be sent based on a requirement. This reduces overheads for sending the SSB and improves efficiency of measuring the SSB by the terminal device.

## Description

### TECHNICAL FIELD

This application relates to the field of communication technologies, and in particular, to a communication method and apparatus.

### BACKGROUND

With development of non-terrestrial networks (non-terrestrial networks, NTNs), a scale of a satellite network is increasingly large. For example, the satellite network has evolved from 66 satellites in the Iridium constellation to 720 satellites in the OneWeb constellation, and has extended to more than 12,000 satellites in the Starlink (Starlink) ultra-dense low earth orbit (low earth orbit, LEO) satellite constellation.

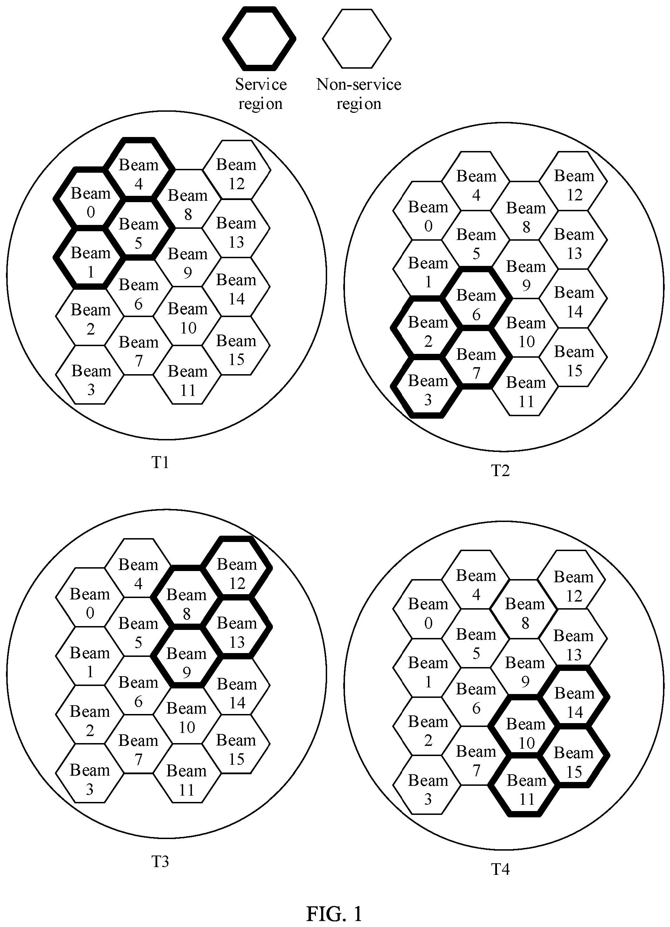

One satellite may cover thousands or even tens of thousands of kilometers, while one beam may cover dozens or even thousands of meters. To support wide coverage of a satellite, the satellite usually needs to be configured with dozens, hundreds, or even more beams. To alleviate a contradiction between small payload and wide coverage of a single satellite, beam hopping may be used for region coverage. To be specific, one satellite may be configured with a large quantity of beams for wide coverage, but only a small quantity of beams are used at a same moment for region coverage, and a plurality of beams are used at different moments for wide coverage. For example, as shown in FIG. 1, one satellite is configured with 16 beams for wide coverage, but only four beams are used at one moment for region coverage. At a moment T1, four beams numbered 0, 1, 4, and 5 are used for region coverage. At a moment T2, four beams numbered 2, 3, 6, and 7 are used for region coverage. By analogy, all regions (namely, regions corresponding to the 16 beams) covered by the single satellite are served through time division of T1, T2, T3, and T4.

When a beam hopping manner is used for region coverage of a satellite, all terminal devices in a region covered by one or more beams may need to perform frequent cell handover or cell reselection. During cell handover or reselection, the terminal device needs to measure an SSB of a target cell. How to improve efficiency of measuring the SSB is a problem that needs to be resolved.

### SUMMARY

This application provides a communication method and apparatus, to improve efficiency of measuring an SSB.

According to a first aspect, an embodiment of this application provides a communication method. The method includes: A first cell may send a first SSB, where the first SSB is an SSB used for initial access. The first cell may further send a second SSB, where the second SSB is an SSB used for cell handover or cell reselection.

Optionally, the first SSB is not used for cell handover or cell reselection. In this way, a terminal device that receives the first SSB does not hand over or reselect to the first cell based on the first SSB. The second SSB is not used for initial access. In this way, a terminal device that receives the second SSB does not initially access the first cell based on the second SSB.

According to the method, the first cell may separately send the first SSB used for initial access and the second SSB used for cell handover or cell reselection. In this way, when the terminal device needs to access the first cell, the first cell may send the first SSB; and when the terminal device needs to hand over or reselect to the first cell, the first cell may send the second SSB, so that the SSB may be sent based on a requirement. This reduces overheads for sending the SSB and improves efficiency of measuring the SSB by the terminal device.

In a possible design, the first cell may send the first SSB in a first region, and send the second SSB in a second region. For example, the first region may be a region in which the first cell sends a data signal, and the second region may be included in a region in which a second cell sends a data signal. According to this design, the first cell may send, in the first region, the first SSB used for initial access, and send, in the second region, the second SSB used for cell handover or cell reselection. In this way, in a beam hopping system, before the first cell covers the second region by using a beam used to send the data signal, a terminal device located in the second region may perform broadcast signal quality measurement and downlink synchronization based on the second SSB, so that when the first cell covers the second region by using the beam used to send the data signal, the terminal device can seamlessly reselect or hand over to the first cell. This improves efficiency of cell reselection and cell handover.

In a possible design, the first cell may further send configuration information to a second cell, where the configuration information may indicate a configuration of sending the second SSB by the first cell. Then, the second cell may send the configuration information to a terminal device in the second cell. According to this design, the first cell may send, to another cell (for example, a neighboring cell of the first cell), the configuration of sending the second SSB by the first cell. In this way, the terminal device in the another cell may receive the second SSB based on the configuration information, so that the terminal device can be prevented from blind detection for the second SSB. This can further reduce energy consumption of the terminal device.

In a possible design, sending time of the first SSB and sending time of the second SSB do not overlap. In other words, the first SSB and the second SSB are sent in a time division manner. According to this design, the first SSB and the second SSB do not overlap in time domain, so that interference between the first SSB and the second SSB can be reduced.

In a possible design, a sending period of the first SSB is less than a sending period of the second SSB. For example, the sending period of the first SSB is one of the following: 5 ms, 10 ms, 20 ms, 40 ms, 80 ms, and 160 ms; and the sending period of the second SSB is several to hundreds of seconds. According to this design, the sending period of the first SSB is less than the sending period of the second SSB, so that overheads for sending the second SSB can be reduced.

In a possible design, both the first SSB and the second SSB are NR SSBs. In other words, the first SSB and the second SSB may reuse a pattern of the NR SSB. In this design, the pattern of the NR SSB can be reused, so that availability of the solution is improved, and the solution is easy to implement.

In a possible design, the first SSB is a CD-SSB, and the second SSB is an NCD-SSB. In this case, the first SSB may reuse the pattern of the NR SSB, occupy a time window of the NR SSB, and use a sequence number of the NR SSB. The second SSB may not occupy the time window of the NR SSB, and does not use the sequence number of the NR SBB. In this design, the second SSB does not use the time window and the sequence number of the NR SSB, so that more available SSBs can be obtained through extension. This improves the efficiency of cell reselection and cell handover.

In a possible design, the NCD-SSB corresponds to a resource used for handover and/or a random access preamble used for handover. A correspondence between the NCD-SSB and the resource used for handover and/or the random access preamble used for handover may be preset, or may be determined by a network device (for example, a first satellite or a network device located on the ground). According to this design, the NCD-SSB may be associated with the dedicated handover resource and/or the random access preamble used for handover, and is used for uplink random access during group handover. This can further improve efficiency of group handover. In addition, the handover resource associated with the NCD-SSB is used, so that the terminal device does not need to obtain resource configuration information used for group handover. This can further reduce overheads. The random access preamble associated with the NCD-SSB is used, so that a conflict between the random access preamble used for handover and a random access preamble used for initial access can be avoided. This further improves a success rate of group handover.

In a possible design, the first cell may send a first offset indication to the second cell, where the first offset indication indicates a time offset between the sending time of the second SSB and the sending time of the first SSB adjacent to the second SSB. Then, the second cell may send the first offset indication to the terminal device in the second cell. According to this design, the terminal device may receive the first SSB from the first cell based on the first offset indication and time at which the second SSB is received, so that the terminal device does not need to perform blind detection for the first SSB, and the second cell does not need to send configuration information of the first SSB to the terminal device. This can further reduce the energy consumption of the terminal device, and reduce overheads for obtaining the configuration information of the first SSB.

In a possible design, the first cell may further update the configuration of sending the second SSB by the first cell, but does not update an SIB of the first cell. According to this design, when updating the configuration of sending the second SSB by the first cell, the first cell does not update the SIB of the first cell, so that overheads required for updating the SIB can be reduced.

According to a second aspect, an embodiment of this application provides a communication method. The method includes: After receiving a third SSB from a second cell, a terminal device accesses the second cell based on the third SSB, where the third SSB is an SSB used for initial access. In this case, the terminal device may be in a connected state. After receiving a second SSB from a first cell, the terminal device may send a measurement report to the second cell based on the second SSB, where the second SSB is an SSB used for cell handover or cell reselection.

According to the method, the terminal device in the connected state may hand over to the first cell based on the second SSB. When all terminal devices in a connected state in a second region hand over to the first cell by using the method, efficiency of group handover can be improved.

In a possible design, the terminal device may further receive configuration information from the second cell, and receive the second SSB from the first cell based on the configuration information, where the configuration information indicates a configuration of sending the second SSB by the first cell. According to this design, the terminal device may receive the second SSB from the first cell based on the second configuration information, so that the terminal device can be prevented from blind detection for the second SSB. This can further reduce energy consumption of the terminal device.

In a possible design, the second SSB is an NCD-SSB. The terminal device may communicate with the first cell by using a resource used for handover and/or a random access preamble used for handover that correspond/corresponds to the NCD-SSB. A correspondence between the NCD-SSB and the resource used for handover and/or the random access preamble used for handover may be preset, or may be determined by a network device (for example, a first satellite or a network device located on the ground). According to this design, the NCD-SSB may be associated with the dedicated handover resource and/or the random access preamble used for handover, and is used for uplink random access during group handover. This can further improve the efficiency of group handover. In addition, the handover resource associated with the NCD-SSB is used, so that the terminal device does not need to obtain resource configuration information used for group handover. This can further reduce overheads. The random access preamble associated with the NCD-SSB is used, so that a conflict between the random access preamble used for handover and a random access preamble used for initial access can be avoided. This further improves a success rate of group handover.

In a possible design, the terminal device may receive a handover command from the second cell, where the handover command indicates the terminal device to hand over to the first cell. Then, the terminal device may receive a first SSB from the first cell, where the first SSB is an SSB used for initial access. According to this design, after receiving the handover command from the second cell, the terminal device may receive the first SSB from the first cell in time.

In a possible design, the terminal device may receive a first offset indication, and receive the first SSB from the first cell based on the first offset indication and time at which the second SSB is received, where the first offset indication indicates a time interval between sending time of the second SSB and sending time of the first SSB adjacent to the second SSB. According to this design, the terminal device may receive the first SSB from the first cell based on the first offset indication and the time at which the second SSB is received, so that the terminal device does not need to perform blind detection for the first SSB, and the second cell does not need to send configuration information of the first SSB to the terminal device. This can further reduce the energy consumption of the terminal device, and reduce overheads for obtaining the configuration information of the first SSB.

In a possible design, the first SSB is not used for cell handover or cell reselection. In this way, a terminal device that receives the first SSB does not hand over or reselect to the first cell based on the first SSB. The second SSB is not used for initial access. In this way, a terminal device that receives the second SSB does not initially access the first cell based on the second SSB.

In a possible design, the sending time of the first SSB and the sending time of the second SSB do not overlap. In other words, the first SSB and the second SSB are sent in a time division manner. According to this design, the first SSB and the second SSB do not overlap in time domain, so that interference between the first SSB and the second SSB can be reduced.

In a possible design, a sending period of the first SSB is less than a sending period of the second SSB. For example, the sending period of the first SSB is one of the following: 5 ms, 10 ms, 20 ms, 40 ms, 80 ms, and 160 ms; and the sending period of the second SSB is several to hundreds of seconds. According to this design, the sending period of the first SSB is less than the sending period of the second SSB, so that overheads for sending the second SSB can be reduced.

In a possible design, both the first SSB and the second SSB are NR SSBs. In other words, the first SSB and the second SSB may reuse a pattern of the NR SSB. In this design, the pattern of the NR SSB can be reused, so that availability of the solution is improved, and the solution is easy to implement.

In a possible design, the first SSB is a CD-SSB, and the second SSB is an NCD-SSB. In this case, the first SSB may reuse the pattern of the NR SSB, occupy a time window of the NR SSB, and use a sequence number of the NR SSB. The second SSB may not occupy the time window of the NR SSB, and does not use the sequence number of the NR SBB. In this design, the second SSB does not use the time window and the sequence number of the NR SSB, so that more available SSBs can be obtained through extension. This improves efficiency of cell reselection and cell handover.

According to a third aspect, an embodiment of this application provides a communication method. The method includes: A terminal device receives a second synchronization signal block SSB from a first cell, where the second SSB is an SSB used for cell handover or cell reselection. The terminal device may further receive a first offset indication, where the first offset indication indicates a time offset between sending time of the second SSB and sending time of a first SSB adjacent to the second SSB, and the first SSB is an SSB used for initial access. After reselecting to the first cell based on the second SSB, the terminal device may receive the first SSB from the first cell based on time at which the second SSB is received and the first offset indication.

According to the method, the terminal device in an idle state may reselect to the first cell based on the second SSB. When all terminal devices in the idle state in a second region reselect to the first cell by using the method, efficiency of group reselection can be improved.

In a possible design, the first SSB is not used for cell handover or cell reselection. In this way, a terminal device that receives the first SSB does not hand over or reselect to the first cell based on the first SSB. The second SSB is not used for initial access. In this way, a terminal device that receives the second SSB does not initially access the first cell based on the second SSB.

In a possible design, the sending time of the first SSB and the sending time of the second SSB do not overlap. In other words, the first SSB and the second SSB are sent in a time division manner. According to this design, the first SSB and the second SSB do not overlap in time domain, so that interference between the first SSB and the second SSB can be reduced.

In a possible design, a sending period of the first SSB is less than a sending period of the second SSB. For example, the sending period of the first SSB is one of the following: 5 ms, 10 ms, 20 ms, 40 ms, 80 ms, and 160 ms; and the sending period of the second SSB is several to hundreds of seconds. According to this design, the sending period of the first SSB is less than the sending period of the second SSB, so that overheads for sending the second SSB can be reduced.

In a possible design, both the first SSB and the second SSB are NR SSBs. In other words, the first SSB and the second SSB may reuse a pattern of the NR SSB. In this design, the pattern of the NR SSB can be reused, so that availability of the solution is improved, and the solution is easy to implement.

In a possible design, the first SSB is a CD-SSB, and the second SSB is an NCD-SSB. In this case, the first SSB may reuse the pattern of the NR SSB, occupy a time window of the NR SSB, and use a sequence number of the NR SSB. The second SSB may not occupy the time window of the NR SSB, and does not use the sequence number of the NR SBB. In this design, the second SSB does not use the time window and the sequence number of the NR SSB, so that more available SSBs can be obtained through extension. This improves efficiency of cell reselection and cell handover.

According to a fourth aspect, an embodiment of this application provides a communication apparatus, including units configured to perform the steps according to any one of the foregoing aspects.

According to a fifth aspect, an embodiment of this application provides a communication apparatus, including at least one processing element and at least one storage element. The at least one storage element is configured to store a program and data, and the at least one processing element is configured to read and execute the program and data that are stored in the storage element, so that the method according to any one of the foregoing aspects of this application is implemented.

According to a sixth aspect, an embodiment of this application provides a communication system, including a first cell configured to perform the method according to the first aspect, and a terminal device configured to perform the method according to the second aspect or the third aspect.

According to a seventh aspect, an embodiment of this application further provides a computer program. When the computer program is run on a computer, the computer is enabled to perform the method according to any one of the foregoing aspects.

According to an eighth aspect, an embodiment of this application further provides a computer-readable storage medium. The computer-readable storage medium stores a computer program. When the computer program is executed by a computer, the computer is enabled to perform the method according to any one of the foregoing aspects.

According to a ninth aspect, an embodiment of this application further provides a chip. The chip is configured to read a computer program stored in a memory, to perform the method according to any one of the foregoing aspects.

According to a tenth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

For technical effect that can be achieved in any one of the fourth aspect to the tenth aspect, refer to the descriptions of the technical effect that can be achieved in any one of the possible designs in any one of the first aspect to the third aspect. Repeated parts are not described.

### BRIEF DESCRIPTION OF DRAWINGS

FIG. 1 is a diagram of a beam hopping communication process according to an embodiment of this application;
FIG. 2A is a diagram of an application scenario of a transparent transmission mode according to an embodiment of this application;
FIG. 2B is a diagram of an application scenario of a non-transparent transmission mode according to an embodiment of this application;
FIG. 3 is a diagram of an architecture of a mobile communication system according to an embodiment of this application;
FIG. 4 is a diagram of an architecture of another mobile communication system according to an embodiment of this application;
FIG. 5 is a diagram of a cell-defining synchronization signal block (synchronization signal block, SSB) (cell-defining SSB, CD-SSB) and a non-cell-defining SSB (non-cell-defining SSB, NCD-SSB) according to an embodiment of this application;
FIG. 6 is a flowchart of a handover method;
FIG. 7A is a flowchart of a communication method according to an embodiment of this application;
FIG. 7B is a flowchart of a possible implementation of a communication method according to an embodiment of this application;
FIG. 8 is a diagram of a mapping relationship between an SSB and a beam position according to an embodiment of this application;
FIG. 9 is a diagram of time domain positions of a first SSB and a second SSB according to an embodiment of this application;
FIG. 10 is another diagram of time domain positions of a first SSB and a second SSB according to an embodiment of this application;
FIG. 11 is a diagram of positions of a first RO and a second RO according to an embodiment of this application;
FIG. 12 is a flowchart of another communication method according to an embodiment of this application;
FIG. 13 is a diagram of coverage regions of a first satellite at different moments according to an embodiment of this application;
FIG. 14 is a flowchart of another communication method according to an embodiment of this application;
FIG. 15 is a flowchart of another communication method according to an embodiment of this application;
FIG. 16 is a diagram of coverage regions of a first satellite and a second satellite at different moments according to an embodiment of this application;
FIG. 17 is a diagram of a structure of a communication apparatus according to an embodiment of this application; and
FIG. 18 is a diagram of a structure of another communication apparatus according to an embodiment of this application.

### DESCRIPTION OF EMBODIMENTS

Embodiments of this application provide a communication method and apparatus. The method and the apparatus are based on a same technical concept. Because problem resolving principles of the method and the apparatus are similar, mutual reference may be made to implementation of the apparatus and the method. Repeated parts are not described again.

The following describes some terms in this application, to facilitate understanding of a person skilled in the art.
(1) A communication apparatus is an apparatus having a communication function. For example, the communication apparatus may be but is not limited to a terminal device, a network device, a relay device, a ground station device, or the like.
(2) A network device is a device that connects a terminal device to a wireless network in a mobile communication system. As a node in a radio access network, the network device may also be referred to as a base station, a radio access network (radio access network, RAN) node (or device), an access point (access point, AP), or an access network (access network, AN) device.

Currently, examples of some network devices are a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a wireless relay node, a wireless backhaul node, a transmission point (transmission point, TP), a mobile switching center, or a home base station (for example, a home evolved NodeB or a home NodeB, HNB). Alternatively, the network device may be an antenna panel or a group of antenna panels of a base station. In addition, the network device may alternatively be a network node that forms a gNB or a TP, for example, a baseband unit (baseband unit, BBU) or a distributed unit (distributed unit, DU). Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

(3) A terminal device is a device that provides voice and/or data connectivity for a user. The terminal device may also be referred to as user equipment (user equipment, UE), a terminal (terminal), an access terminal, a terminal unit, a terminal station, a subscriber unit, a subscriber station, a mobile station (mobile station, MS), a remote station, a remote terminal, a mobile terminal (mobile terminal, MT), a wireless communication device, customer-premises equipment (customer-premises equipment, CPE), a wireless communication device, a user agent, a user apparatus, a terminal agent, or the like.

For example, the terminal device may be a handheld device having a wireless connection function, or may be a vehicle or a vehicle-mounted device (for example, a vehicle-mounted communication apparatus or a vehicle-mounted communication chip) having a communication function, a wearable device, a computing device, or another processing device connected to a wireless modem. Currently, examples of terminal devices are a mobile phone (mobile phone), a satellite phone, a cellular phone, a cordless phone, a session initiation protocol (session initiation protocol, SIP) phone, a wireless data card, a wireless modem, a machine-type communication device, a wireless local loop (wireless local loop, WLL) station, a personal digital processing (personal digital assistant, PDA) device, a tablet computer, a computer with a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation security (transportation safety), a wireless terminal in a smart city (smart city), and a wireless terminal in a smart home (smart home).

(4) A ground station device is a device that is disposed on the ground and can communicate with an NTN device in an NTN system. The ground station device is, for example, a core network (core network, CN) device. The CN device is a network element included in a CN part in a mobile communication system. The CN device can connect a terminal device to different data networks, and perform services such as authentication, charging, mobility management, session management, policy control, and user plane forwarding. The CN device may be a CN device in a current mobile communication system (for example, a 5^{th} generation (5^{th} generation, 5G) mobile communication system), or may be a CN device in a future mobile communication system. In mobile communication systems of different standards, names of CN devices having a same function may be different. However, a specific name of a CN device having each function is not limited in embodiments of this application.

For example, in a 4^{th} generation (4^{th} generation, 4G) mobile communication system (namely, long term evolution (long term evolution, LTE)), a network element responsible for functions such as access control, security control, and signaling coordination is a mobility management entity (mobility management entity, MME), a network element used as a local mobility management anchor is a serving gateway (serving gateway, S-GW), a network element used as a handover anchor of an external data network and responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element responsible for a policy and charging function is referred to as a policy and charging control rule function (policy and charging rule function, PCRF) network element.

For another example, in a 5G mobile communication system, based on specific logical function division, a core network may be divided into a control plane (control plane, CP) and a user plane (user plane, UP). A network element responsible for a control plane function in the CN may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for subscription data management and user access authorization functions is referred to as a unified data management (unified data management, UDM) network element, a network element responsible for charging and policy control functions is referred to as a policy control function (policy and charging function, PCF) network element, and a network element responsible for transmitting a requirement of an application side for a network side is an application function (application function, AF) network element.

### (5) NTN communication:

NTN communication uses devices such as an unmanned aerial vehicle, a high altitude platform station (high altitude platform station, HAPS), and a satellite for networking, to provide services such as data transmission and voice communication for a terminal device. A height between the high altitude platform and the ground is 8 to 50 kilometers (km). Based on satellite altitudes, namely, satellite orbital heights, satellite communication systems in NTN communication may include a geostationary earth orbit (geostationary earth orbit, GEO) satellite, a medium earth orbit (medium earth orbit, MEO) satellite, and a low earth orbit (low earth orbit, LEO) satellite. Descriptions are separately provided below.
1. The GEO satellite is also referred to as a geosynchronous satellite or a stationary satellite. A movement speed of the GEO satellite is the same as a rotation speed of the earth. Therefore, the GEO satellite remains stationary relative to the ground. Accordingly, a cell of the GEO satellite is also stationary. An orbit of the GEO satellite is high, for example, an orbital altitude of the GEO satellite may be 35,786 km, so that a large coverage area can be provided. A cell diameter of the GEO satellite is usually 500 km.
2. The MEO satellite is a non-geostationary earth orbit (non-geostationary earth orbit, NGEO) satellite. A movement speed of the non-geostationary earth orbit satellite is different from the rotation speed of the earth. Therefore, the non-geostationary earth orbit satellite moves relative to the ground. An orbital altitude of the MEO satellite ranges from 2,000 km to 35,786 km, and global coverage can be implemented by using a small quantity of satellites. The MEO satellite is mainly used for positioning and navigation.
3. The LEO satellite is another type of NGEO satellite. An orbital altitude of the LEO satellite ranges from 300 km to 2,000 km, and the LEO satellite has advantages of a low data propagation delay, a low transmission loss, and low transmission costs. The LEO satellite moves fast relative to the ground at a speed of about 7 km/s. Therefore, a coverage region served by the LEO satellite also moves accordingly.

In NTN communication, an operating mode of an NTN device (for example, a high altitude platform or a satellite) may include a transparent (transparent) transmission mode and a non-transparent transmission mode.

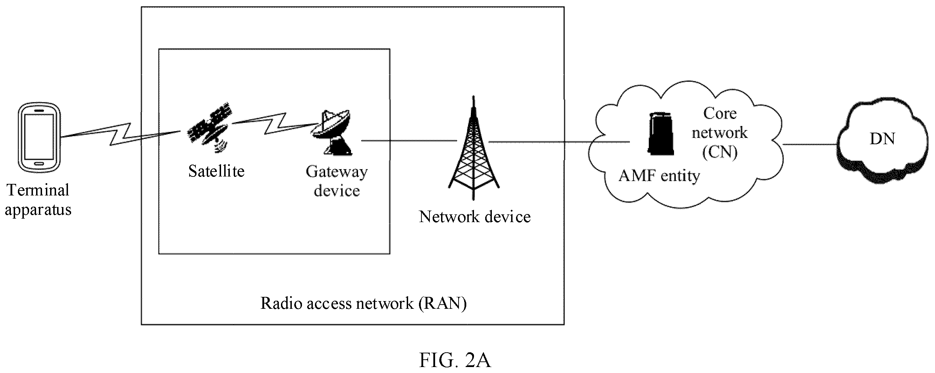

Transparent transmission is also referred to as bent-pipe forwarding transmission. When operating in the transparent transmission mode, the NTN device has a relay forwarding function. The NTN device may perform frequency conversion and/or amplification processing on a signal, but does not change content of the signal. For example, an application scenario of the transparent transmission mode may be shown in FIG. 2A. In the application scenario shown in FIG. 2A, a network device is disposed on the ground, and may be connected to a data network (data network, DN) over a CN. A satellite and a gateway device may be used as a remote radio unit (remote radio unit, RRU) of the network device, and are configured to transmit information between the network device and a terminal device.

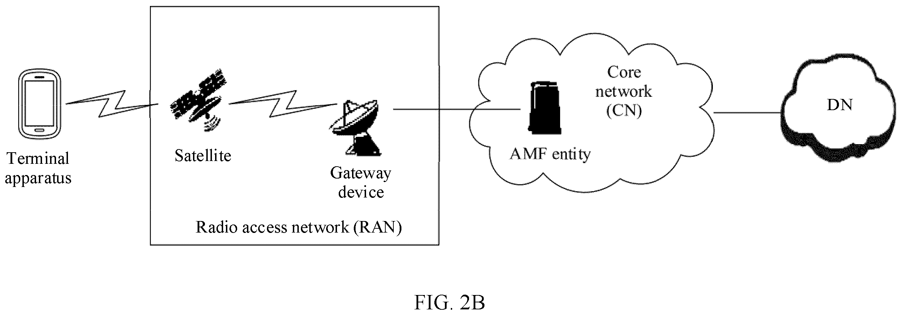

The non-transparent transmission mode may also be referred to as a regenerative (regenerative) mode. The NTN device operating in the non-transparent transmission mode has all or some capabilities of a network device. For example, an application scenario of the non-transparent transmission mode may be shown in FIG. 2B. In the application scenario shown in FIG. 2B, a satellite may be used as a network device to form an access network with a gateway device, and communicate with a core network via the gateway device. For example, the satellite may be used as the network device, and establish an N2 interface connection or an Ng interface connection to an AMF in the core network via the gateway device. In addition, the satellite may further provide a wireless access service for a terminal device.

(6) An SSB may include a primary synchronization signal (primary synchronization signal, PSS), a secondary synchronization signal (secondary synchronization signal, SSS), and a physical broadcast channel (physical broadcast channel, PBCH). The PSS may be used to transmit a cell identity, and the SSS may be used to transmit a cell group identity. The cell identity and the cell group identity jointly determine a plurality of physical cell identities (physical cell identities, PCIs) in a mobile communication system. Once a terminal device successfully finds the PSS and the SSS, the terminal device learns of a physical cell identity of a carrier carrying the PSS and the SSS, and therefore, has a capability of parsing a system message included in the SSB.

The system information in the SSB may be carried in the PBCH. The information is information necessary for accessing a network by the terminal device, and therefore, may be referred to as a main information block (main information block, MIB). The MIB may include a system frame number, a subcarrier spacing in initial access, and the like.

The MIB includes information that is limited and is not enough to support the terminal device in accessing a cell. Therefore, the terminal device may further obtain other system information, for example, a system information block (system information block, SIB) 1. The SIB 1 may be transmitted on a physical downlink shared channel (physical downlink shared channel, PDSCH) in a period of 160 milliseconds (ms). The terminal device may obtain, from the MIB carried in the PBCH, a parameter used for transmitting the SIB 1, to receive the SIB 1. In this way, the terminal device can obtain the system information required for accessing the cell, and can subsequently access the cell.

### (7) Radio resource control (radio resource control, RRC) connected state

In a mobile communication system, an RRC connected state of a terminal device includes an RRC connected state (RRC_connected, connected state for short) and an RRC idle state (RRC_idle, idle state for short).

When the terminal device is in the idle state, an RRC connection between the terminal device and a network device is disconnected, the network device and the terminal device no longer store context information of the terminal device, and the terminal device may receive broadcast information (for example, system information) and a paging message that are sent by the network device.

When the terminal device is in the connected state, there is the RRC connection between the terminal device and the network device, and the terminal device and the network device can communicate with each other through the RRC connection. In the RRC connected state, if a cell handover failure, a radio link failure, an RRC connection reconfiguration (RRC connection reconfiguration) procedure failure, or the like occurs, the terminal device triggers an RRC connection reestablishment procedure.
(8) In this application, a parameter used to reflect signal quality may include but is not limited to at least one of the following: reference signal received power (reference signal received power, RSRP), reference signal received quality (reference signal received quality, RSRQ), or a received signal strength indicator (received signal strength indicator, RSSI).
(9) A beam position may be a region covered by a beam. For example, as shown in FIG. 1, at a moment T1, a region covered by a beam 0 is a beam position.

In embodiments of this application, an apparatus configured to implement a function of a satellite may be a satellite, or may be an apparatus that can support the satellite in implementing the function, for example, a chip system. The apparatus may be installed in the satellite. When the technical solutions provided in embodiments of this application are described below, an example in which an apparatus configured to implement a function of a satellite is a satellite is used to describe the technical solutions provided in embodiments of this application.

In embodiments of this application, an apparatus configured to implement a function of a terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, the following uses an example in which an apparatus configured to implement a function of a terminal device is a terminal device to describe the technical solutions provided in embodiments of this application.

In embodiments of this application, unless otherwise specified, a quantity of nouns indicates "a singular noun or a plural noun", namely, "one or more". "At least one" means one or more, and "a plurality of" means two or more. A term "and/or" describes an association relationship between associated objects and indicates that three relationships may exist. For example, A and/or B may indicate the following three cases: Only A exists, both A and B exist, and only B exists. "At least one of the following items (pieces)" or a similar expression thereof means any combination of these items (pieces), including any combination of singular items (pieces) or plural items (pieces).

In addition, it should be understood that, in descriptions of this application, terms such as "first" and "second" are merely used for distinguishing and description, but should not be understood as indicating or implying relative importance, or should not be understood as indicating or implying a sequence.

The following describes in detail embodiments of this application with reference to accompanying drawings.

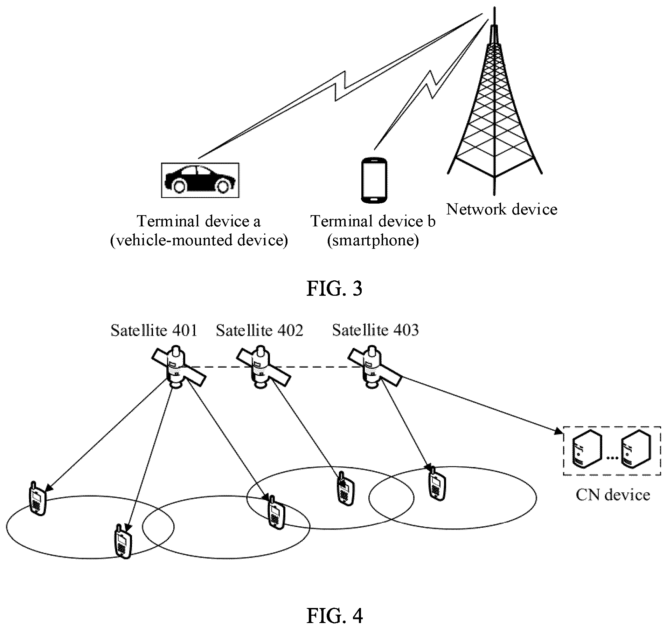

FIG. 3 shows a structure of a mobile communication system to which a method according to an embodiment of this application is applicable. Refer to FIG. 3. The system includes a network device and a terminal device (for example, a terminal device a and a terminal device b shown in FIG. 3).

The network device is an entity that can receive and transmit a radio signal on a network side, is responsible for providing a service related to radio access for a terminal device in coverage of the network device, and implements a physical layer function and functions of resource scheduling and radio resource management, quality of service (Quality of Service, QoS) management, radio access control, and mobility management.

The terminal device is an entity that can receive and transmit a radio signal on a user side, and needs to access a network via the network device. The terminal device may be various devices that provide voice and/or data connectivity for a user. For example, as shown in FIG. 3, the terminal device may be a vehicle-mounted device, a smartphone, or the like.

FIG. 4 shows a structure of another mobile communication system to which a method according to an embodiment of this application is applicable. The communication system may be an NTN communication system. In this embodiment of this application, an example in which the NTN communication system is a satellite communication system is used for description. As shown in FIG. 4, the NTN communication system includes a satellite (for example, a satellite 401, a satellite 402, and a satellite 403 in FIG. 4), a CN device, and a terminal device.

For the CN device and the terminal device, respectively refer to the foregoing descriptions of the CN device and the terminal device.

The satellite may be an NGEO satellite, for example, an LEO satellite. The satellite may perform wireless communication with the terminal device by using a broadcast communication signal, a navigation signal, and the like. Optionally, each satellite may provide a communication service, a navigation service, a positioning service, and the like for the terminal device via a plurality of beams. For example, each satellite uses a plurality of beams to cover a service region, and a relationship between different beams may be one or more of time division, frequency division, and space division. At least one satellite may communicate with a ground station device. For example, the satellite 403 may be connected to the CN device to perform wireless communication with the CN device.

The satellite may operate in a transparent transmission mode. For example, the satellite 403 in FIG. 4 operates in the transparent transmission mode. The satellite may alternatively operate in a non-transparent transmission mode. For example, the satellite 401 and the satellite 402 in FIG. 4 operate in the non-transparent transmission mode. In addition, the satellite may further operate in a quasi earth-fixed (quasi earth-fixed) mode or a satellite-fixed (satellite-fixed) mode. The quasi earth-fixed mode may also be referred to as a steerable mode, and means that a beam direction of a satellite is dynamically adjusted, so that the satellite continuously serves a physical region in a time period. In the satellite-fixed mode, a beam of a satellite moves with the satellite, and the physical region served by the satellite also changes continuously.

The satellite mentioned in embodiments of this application may be a satellite base station, may include an orbit receiver or a repeater configured to forward information, or may be a network device installed on the satellite.

It should be further noted that the mobile communication system shown in FIG. 3 or FIG. 4 is used as an example, and does not constitute a limitation on a communication system to which the method provided in embodiments of this application is applicable. In conclusion, the method provided in embodiments of this application is applicable to various communication systems and application scenarios in which a terminal device supports a multi-transmit capability. In other words, embodiments of this application may be further applied to communication systems of various types and standards, for example, a 5G communication system, an LTE communication system, a wireless fidelity (wireless fidelity, Wi-Fi) system, vehicle-to-everything (vehicle-to-everything, V2X), long term evolution-vehicle (LTE-vehicle, LTE-V), vehicle-to-vehicle (vehicle-to-vehicle, V2V), internet of vehicles, machine-type communication (machine-type communication, MTC), internet of things (internet of things, IoT), long term evolution-machine-to-machine (LTE-machine-to-machine, LTE-M), machine-to-machine (machine-to-machine, M2M), an integrated communication and navigation (integrated communication and navigation, IcaN) system, a global navigation satellite system (global navigation satellite system, GNSS), an ultra-dense low earth orbit satellite communication system, or the like. This is not limited in embodiments of this application.

For ease of understanding this application, the following describes related technologies.

### 1. CD-SSB and NCD-SSB:

The CD-SSB includes configuration information (namely, configuration information of a CORESET 0) of an associated control resource set (control resource set) and configuration information of a monitoring occasion of type 0 physical downlink control channel common search space (Type 0 physical downlink control channel common search space, Type 0-PDCCH CSS). Currently, the CD-SSB may be used for initial access, cell reselection, or cell handover. A terminal device in an idle state may perform initial access or cell reselection based on the CD-SSB. A terminal device in a connected state may perform cell handover based on the CD-SSB.

The NCD-SSB does not include configuration information of an associated control resource set (namely, configuration information of a CORESET 0) or configuration information of a monitoring occasion of Type 0-PDCCH CSS. The NCD-SSB may be used for radio resource management.

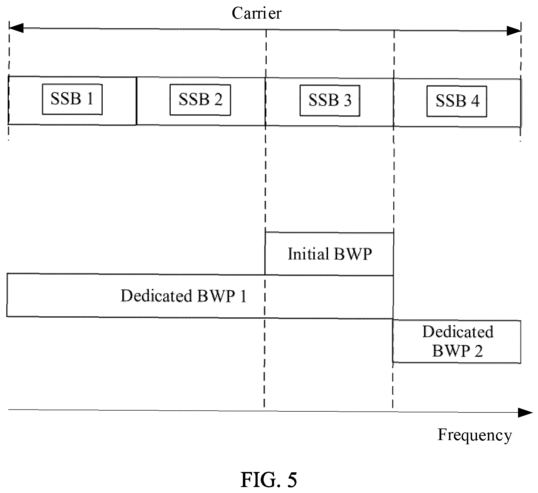

Currently, the CD-SSB and the NCD-SSB use frequency division multiplexing, that is, the CD-SSB and the NCD-SSB are carried on different frequencies. Optionally, the CD-SSB and the NCD-SSB are carried on different bandwidth parts (bandwidth parts, BWPs). For example, as shown in FIG. 5, the CD-SSB includes an SSB 1 and an SSB 3, and the NCD-SSB includes an SSB 2 and an SSB 4. If an operating frequency of UE 1 includes an initial BWP (initial BWP), for example, the operating frequency of the UE 1 is a dedicated BWP 1 (dedicated BWP 1), and the dedicated BWP 1 includes the initial BWP, the UE 1 may perform initial access, cell handover, or cell reselection based on the SSB 3 in the initial BWP. The NCD-SSB is located outside the initial BWP, and a terminal device whose operating frequency is outside the initial BWP may perform signal measurement based on the NCD-SSB. For example, if an operating frequency of UE 2 is a dedicated BWP 2, and the dedicated BWP 2 does not include the initial BWP, the UE 2 may perform signal measurement based on the SSB 4.

In addition, there may be a specific offset (referred to as a frequency offset below) between a transmission frequency of the CD-SSB and a transmission frequency of the NCD-SSB. After detecting the NCD-SSB, the terminal device may determine a position of the CD-SSB in frequency domain based on the frequency offset. The frequency offset may be indicated by a parameter K_SSB carried in the NCD-SSB, and correspond to an SSB subcarrier offset (ssb-SubcarrierOffset) parameter in a main information block (main information block, MIB) message.

### 2. Cell handover:

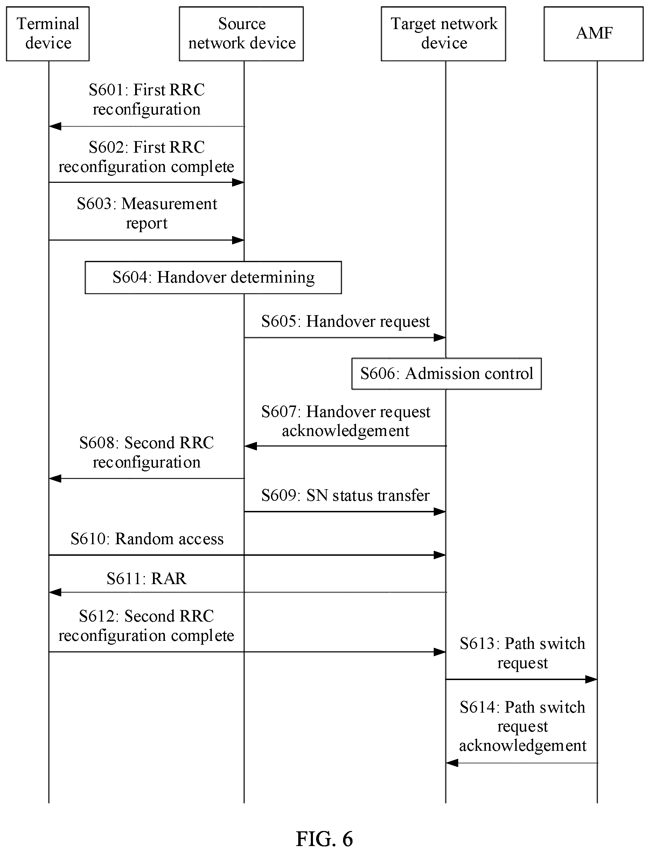

When a terminal device is in a connected state, a network device may send measurement configuration information to the terminal device by using an RRC connection reconfiguration message. The terminal device measures signal strength of a serving cell and a neighboring cell based on the measurement configuration information delivered by the network device, and reports a measurement result. Then, the network device may determine, based on the measurement result, whether to perform handover. The following describes a current handover procedure with reference to FIG. 6.

S601: A source network device sends a first RRC reconfiguration (RRCReconfiguration) message to a terminal device.

The first RRC reconfiguration message may include measurement configuration information of at least one cell. The at least one cell may include a serving cell and a neighboring cell of the terminal device.

S602: The terminal device sends a first RRC reconfiguration complete (RRCReconfigurationComplete) message to the source network device.

The first RRC reconfiguration complete message may indicate that the terminal device receives the first RRC reconfiguration message.

S603: The terminal device performs measurement based on the measurement configuration information, and sends a measurement report to the source network device.

Optionally, the terminal device may measure, based on the measurement configuration information, the serving cell and/or the neighboring cell by using an SSB associated with a current active BWP. In some possible manners, the terminal device may periodically send the measurement report to the source network device. The period for sending the measurement report may be preset, or may be obtained by the terminal device from the source network device. In some other possible manners, the terminal device may send the measurement report to the source network device when the measurement result meets a reporting condition. The reporting condition may include at least one of the following: Signal quality of the serving cell is less than or equal to a first signal quality threshold, and signal quality of the neighboring cell is greater than or equal to a second signal quality threshold.

S604: The source network device determines whether to perform handover based on the measurement report from the terminal device.

For example, if the measurement report of the terminal device includes signal quality of a cell of a target network device, and the signal quality of the cell of the target network device is greater than or equal to the second signal quality threshold, the source network device may determine to hand over the terminal device to the target network device.

S605: The source network device sends a handover request (handover request) message to the target network device.

The handover request is used to request to hand over the terminal device from the source network device to the target network device.

S606: The target network device performs admission control.

For example, the target network device may configure, for the terminal device, a resource required for handover.

S607: The target network device sends a handover request acknowledgement (handover request acknowledgement) message to the source network device.

The handover request acknowledgement message may indicate that the target network device agrees to hand over the terminal device to the target network device.

S608: The source network device sends a second RRC reconfiguration message to the terminal device.

The second RRC reconfiguration message may also be referred to as a handover command, and indicates the terminal device to hand over from the source network device to the target network device.

Optionally, the second RRC reconfiguration message may include a configuration parameter of the cell of the target network device, for example, an identifier of the cell of the target network device or a frequency of the cell of the target network device.

S609: The source network device sends a sequence number (sequence number, SN) status transfer (SN status transfer) message to the target network device.

The SN status transfer message may include a sequence number indicating a data packet that is transmitted by the source network device to the terminal device.

Optionally, the source network device forwards, to the target network device, data to be sent to the terminal device.

S610: The terminal device sends a random access (random access) message to the target network device based on the configuration parameter that is of the cell of the target network device and that is in the second RRC reconfiguration message, to request to access the cell of the target network device.

A random access preamble in the random access message is a dedicated preamble, and is different from a contention-based random access preamble used during initial access. In addition, a period of a resource used to send the random access may be at least one of the following: 10 ms, 20 ms, 40 ms, 80 ms, or 160 ms.

S611: The target network device sends a random access response (random access response, RAR) message to the terminal device.

S612: The terminal device sends a second RRC reconfiguration complete message to the target network device.

After accessing the target network device, the terminal device may exchange data with the target network device. For example, the terminal device may send uplink data to the target network device. For another example, the terminal device may receive downlink data from the target network device.

S613: The target network device sends a path switch request (path switch request) message to an AMF.

The path switch request message may be used to request a core network to send the data of the terminal device to the target network device.

S614: The AMF sends a path switch request acknowledgement (path switch request acknowledgement) message to the target network device.

After receiving the path switch request acknowledgement message, the target network device may send the uplink data from the terminal device to the core network.

According to the method shown in FIG. 6, the terminal device may hand over from the source network device to the target network device.

### 3. Cell reselection:

When a terminal device is in an idle state, after camping on a serving cell, the terminal device may continuously perform cell reselection by measuring signal strength of the serving cell and signal strength of a neighboring cell, to camp on a cell with a higher priority or better channel quality. A cell reselection procedure may include steps H1 to H3:
H1: A cell of a first network device broadcasts measurement configuration information of at least one cell. The at least one cell may include a serving cell and a neighboring cell of a terminal device.
H2: The terminal device measures signal quality of the at least one cell based on the measurement configuration information.

Optionally, the terminal device may measure, based on the measurement configuration information, the serving cell and/or the neighboring cell by using an SSB associated with a current active BWP, to obtain signal quality of the serving cell and/or the neighboring cell.

H3: When a reselection condition is met, the terminal device may reselect to a cell of a second network device.

The reselection condition may include at least one of the following: Signal quality of the cell of the second network device is greater than signal quality of the cell of the first network device, and the signal quality of the cell of the second network device is greater than or equal to a third signal quality threshold. The third signal quality threshold may be preset, or may be obtained by the terminal device from the first network device.

Currently, the SSB is used for both initial access and cell handover or cell reselection. Therefore, the cell needs to frequently send the SSB, so that the terminal device can perform initial access, cell handover, or cell reselection based on the SSB. In this way, overheads for sending the SSB are large, and communication efficiency is low. How to reduce SSB overheads and improve efficiency of measuring the SSB is a problem that needs to be resolved in this application.

In addition, a current cell handover or cell reselection method is usually designed based on movement of the terminal device, and cell handover or cell reselection is performed based on the signal quality detected by the terminal device. However, near-far effect in the NTN communication system is not obvious. In this case, efficiency of triggering cell handover or cell reselection based on the signal quality is low. However, when a satellite covers a region in a beam hopping manner, terminal devices in a region covered by one or more beams may all need to perform frequent cell handover or cell reselection. How to improve efficiency of cell handover or cell reselection is another problem that needs to be resolved in this application.

The following describes the solutions provided in this application with reference to the accompanying drawings.

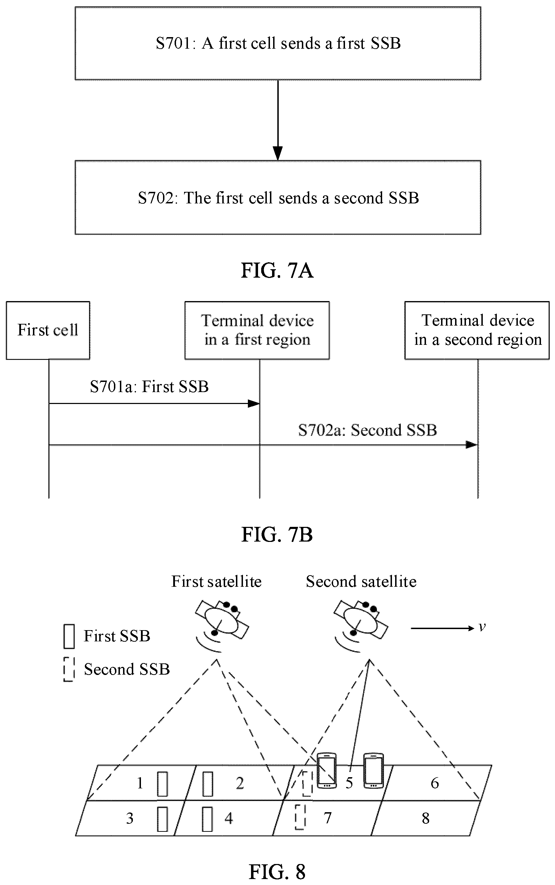

An embodiment of this application provides a communication method. The method may be applied to the communication system shown in FIG. 3 or FIG. 4. The following specifically describes a procedure of the method with reference to a flowchart shown in FIG. 7A.

S701: A first cell sends a first SSB.

The first SSB is an SSB used for initial access. For example, the first SSB may be used in an initial random access procedure. In addition, the first SSB may be further used in a procedure other than cell handover or cell reselection, for example, a procedure like beam failure recovery, uplink data transmission, or RRC connection reestablishment.

The first cell may be a cell in a coverage region of a first satellite, and the first satellite may cover at least one region.

Optionally, the first cell may send the first SSB based on configuration information of the first SSB (referred to as first configuration information below). The first configuration information may include at least one of the following:
1. A time domain length of the first SSB may indicate a time length of a time domain resource occupied by the first SSB. For example, the time domain length of the first SSB is four orthogonal frequency division multiplexing (orthogonal frequency division multiplexing, OFDM) symbols (symbols).
2. A sending period of the first SSB may indicate a period for sending the first SSB. For example, the sending period of the first SSB may be 5 ms, 10 ms, 20 ms, 40 ms, 80 ms, or 160 ms.
3. An SSB bitmap (bitmap, also referred to as a bit indication) of the first SSB may indicate whether one or more SSBs exist. For example, it is assumed that there are a maximum of four SSBs (for example, the four SSBs may be identified as an SSB 0, an SSB 1, an SSB 2, and an SSB 3), 4 bits in the SSB bitmap one-to-one correspond to the four SSBs, and each bit indicates whether a corresponding SSB exists. When a value of 1 bit in the SSB bitmap is 0, it indicates that a corresponding SSB does not exist in a time period. When a value of 1 bit in the SSB bitmap is 1, it indicates that a corresponding SSB exists in a time period. For example, when the SSB bitmap is 0011, it indicates that the SSB 0 and the SSB 1 do not exist in the current time period, and the SSB 2 and the SSB 3 exist in the current time period. When the SSB bitmap is 1011, it indicates that the SSB 0, the SSB 2, and the SSB 3 exist in the current time period, and the SSB 1 does not exist in the current time period.
4. A measurement window configuration of the first SSB may indicate a plurality of time windows in which the first SSB can be measured. The measurement window configuration may include information indicating one of the plurality of time windows and a time interval between every two adjacent time windows in the plurality of time windows. The time interval between every two adjacent time windows may be the same as the sending period of the first SSB. For example, the measurement window configuration may include start time information (for example, 0 ms) and end time information (for example, 5 ms) of a time window 1 in which the first SSB can be measured, and a time interval (for example, 20 ms) between every two adjacent time windows. For another example, the measurement window configuration may include start time information (for example, 0 ms) of a time window 1 in which the first SSB can be measured, a time length (for example, 5 ms) occupied by the time window 1, and a time interval (for example, 20 ms) between every two adjacent time windows.
5. A measurement window offset (offset) of the first SSB indicates an offset of start time of a measurement window of the first SSB relative to a time reference point, and the time reference point may be a frame boundary or a time point defined by a system. For example, if the measurement window offset of the first SSB is 4 ms, it indicates that the start time of the measurement window of the first SSB is delayed by 4 ms at the frame boundary or the time point defined by the system.
6. A reference point location (reference location) of the first SSB indicates a projection location (for example, a longitude and latitude location or xyz coordinates in an earth-centered earth-fixed (earth-centered earth-fixed, ECEF) coordinate system) of a center point of a beam in which the first SSB is located on a spherical surface.

The first configuration information may be preset, may be determined by the first cell, or may be set by another device (for example, a network device on the ground) for the first cell.

In addition, the first configuration information may be updated in a manner the same as an update mechanism of an SIB 1. When the first configuration information is updated, update of the SIB 1 of the first cell may be triggered.

Optionally, the first cell may explicitly or implicitly indicate that the first SSB is the SSB used for initial access. For example, the first SSB includes a first indication, where the first indication indicates that the current SSB is the SSB used for initial access. The first indication may be located in a first field of the first SSB. When a value of the first field is a first value, the current SSB is the SSB used for initial access. In this way, a terminal device may determine, based on the first indication, that the received SSB is the first SSB. For another example, the first SSB includes a first default parameter. In this way, the terminal device may determine, based on the first default parameter, that the received SSB is the first SSB. For another example, the first SSB is carried on a first specified frequency. In this way, the terminal device may determine, based on the first specified frequency that carries the first SSB, that the received SSB is the first SSB.

S702: The first cell sends a second SSB. Correspondingly, the terminal device receives the second SSB from the first cell.

The second SSB is an SSB specially used for cell handover or cell reselection. In this way, a terminal device that receives the second SSB may hand over or reselect to the first cell based on the second SSB.

Optionally, the first cell may send the second SSB based on configuration information of the second SSB (referred to as second configuration information below). The second configuration information may include at least one of the following: a time domain length of the second SSB, a sending period of the second SSB, an SSB bitmap of the second SSB, a measurement window configuration of the second SSB, a measurement window offset of the second SSB, and a reference point location of the second SSB. For specific content of the second configuration information, refer to the descriptions of the first configuration information. The only difference is that the first SSB in the configuration information is replaced with the second SSB. Repeated parts are not described again.

The second configuration information may be preset, may be determined by the first cell, or may be set by another device (for example, a network device on the ground) for the first cell.

Optionally, the first cell may explicitly or implicitly indicate the second SSB. For example, the second SSB includes a second indication, where the second indication indicates that the current SSB is the SSB used for cell handover or cell reselection. The second indication may be located in a second field of the second SSB. When a value of the second field is a second value, the current SSB is the SSB used for cell handover or cell reselection. In this way, the terminal device may determine, based on the second indication, that the received SSB is the second SSB. For another example, the second SSB includes a second default parameter. In this way, the terminal device may determine, based on the second default parameter, that the received SSB is the second SSB. For another example, the second SSB is carried on a second specified frequency. In this way, the terminal device may determine, based on the second specified frequency that carries the second SSB, that the received SSB is the second SSB.

Optionally, in the method shown in FIG. 7A, the first SSB is not used for cell handover or cell reselection. In this way, a terminal device that receives the first SSB does not hand over or reselect to the first cell based on the first SSB. The second SSB is not used for initial access. In this way, a terminal device that receives the second SSB does not initially access the first cell based on the second SSB.

Optionally, in the method shown in FIG. 7A, the first SSB and the second SSB may be implemented in one of the following implementations:
Implementation 1: Both the first SSB and the second SSB are NR SSBs. In other words, the first SSB and the second SSB may reuse a pattern (pattern) of the NR SSB. In this manner, the pattern of the NR SSB may be reused, so that availability of the solution is improved, and the solution is easy to implement.
Implementation 2: The first SSB is a CD-SSB, and the second SSB is an NCD-SSB. In this case, the first SSB may reuse a pattern of the NR SSB, occupy a time window of the NR SSB, and use a sequence number of the NR SSB. The second SSB may not occupy the time window of the NR SSB, and does not use the sequence number of the NR SBB. For example, a time window length of the NR SSB is 5 ms, and a maximum sequence number of the NR SSB is 64. In this manner, the second SSB does not use the time window and the sequence number of the NR SSB, so that more available SSBs can be obtained through extension. This improves efficiency of cell reselection and cell handover.

Optionally, in the implementation 2, the second configuration information may further include a to-be-measured NCD-SSB set. For example, the to-be-measured NCD-SSB set may include sequence number information of the to-be-measured NCD-SSB. For example, the to-be-measured NCD-SSB set includes one or more of {NCD-SSB 0, NCD-SSB 1, ..., and NCD-SSB M}, where M is a maximum quantity of NCD-SSBs supported by a network, for example, M may be 4, 8, 16, 32, or 64.

In addition, in the implementation 2, when a time window includes a plurality of CD-SSBs and/or NCD-SSBs, the CD-SSB and the NCD-SSB may be distinguished by using at least one of the following:
1. SSB pattern: A pattern of the CD-SSB is different from a pattern of the NCD-SSB. Therefore, the terminal device may determine, based on the pattern, whether the received SSB is the CD-SSB or the NCD-SSB.
2. Sending period of the SSB: A sending period of the CD-SSB may be different from a sending period of the NCD-SSB. For example, the period of the CD-SSB is 20 ms, and the period of the NCD-SSB is 5s. Therefore, the terminal device may determine, based on the sending period of the SSB, whether the received SSB is the CD-SSB or the NCD-SSB.
3. MIB: In some possible manners, the MIB may include first-type indication information indicating a type of the SSB, and the first-type indication information may occupy 1 bit. For example, when a value of the first-type indication information is 0, it indicates that the current SSB is the CD-SSB; or when a value of the first-type indication information is 1, it indicates that the current SSB is the NCD-SSB. In some other possible manners, the MIB may alternatively implicitly indicate the type of the SSB. For example, when a scrambling manner of the MIB is a first scrambling manner, it indicates that the current SSB is the CD-SSB; or when a scrambling manner of the MIB is a second scrambling manner, it indicates that the current SSB is the NCD-SSB. The first scrambling manner is different from the second scrambling manner. For another example, when a demodulation reference signal (demodulation reference signal, DMRS) pattern corresponding to the MIB is a first pattern, it indicates that the current SSB is the CD-SSB; or when a DMRS pattern corresponding to the MIB is a second pattern, it indicates that the current SSB is the NCD-SSB. The first pattern is different from the second pattern.
4. PBCH payload (payload): In some possible manners, the PBCH payload may include second-type indication information indicating the type of the SSB, and the second-type indication information may occupy 1 bit. For example, when a value of the second-type indication information is 0, it indicates that the current SSB is the CD-SSB; or when a value of the second-type indication information is 1, it indicates that the current SSB is the NCD-SSB. In some other possible manners, the PBCH payload may alternatively implicitly indicate the type of the SSB. For example, when a scrambling manner of the PBCH payload is a third scrambling manner, it indicates that the current SSB is the CD-SSB; or when a scrambling manner of the PBCH payload is a fourth scrambling manner, it indicates that the current SSB is the NCD-SSB. The third scrambling manner is different from the fourth scrambling manner.

According to the method shown in FIG. 7A, the first cell may separately send the first SSB used for initial access and the second SSB used for cell handover or cell reselection. In this way, when the terminal device needs to access the first cell, the first cell may send the first SSB; and when the terminal device needs to hand over or reselect to the first cell, the first cell may send the second SSB, so that the SSB may be sent based on a requirement. This reduces overheads for sending the SSB and improves efficiency of measuring the SSB by the terminal device.

In addition, the first cell separately sends the first SSB used for initial access and the second SSB used for cell handover or cell reselection. In this way, the terminal device performs cell handover or cell reselection based on the second SSB only after receiving the second SSB, to avoid a problem of low efficiency caused by triggering cell handover or cell reselection only based on signal quality in NTN communication. This can further improve the efficiency of cell reselection and cell handover.

Optionally, in S701, the first cell may send the first SSB in a first region. For example, as shown in FIG. 7B, S701 includes S701a: The first cell sends the first SSB to a terminal device in the first region. In S702, the first cell may send the second SSB in a second region. For example, as shown in FIG. 7B, S702 includes S702a: The first cell sends the second SSB to a terminal device in the second region.

The first region may be a region in which the first cell sends a data signal, and the second region may be included in a region in which a second cell sends a data signal. The second cell may be a cell in a coverage region of a second satellite, the first satellite and the second satellite are adjacent satellites, and the second satellite may cover at least one region. For example, as shown in FIG. 8, the first cell of the first satellite may send a data signal in a beam position 1 to a beam position 4, and the second cell of the second satellite may send a data signal in a beam position 5 to a beam position 8. Both the first satellite and the second satellite move to the right. In this case, the first cell sends the first SSB in the beam position 1 to the beam position 4. The first cell sends the second SSB in the beam position 5.

According to the method, the first cell may send, in the first region, the first SSB used for initial access, and send, in the second region, the second SSB used for cell handover or cell reselection. In this way, in a beam hopping system, before the first cell covers the second region by using the beam used to send the data signal, the terminal device located in the second region may perform broadcast signal quality measurement and downlink synchronization based on the second SSB, so that when the first cell covers the second region by using the beam used to send the data signal, the terminal device can seamlessly reselect or hand over to the first cell. This improves the efficiency of cell reselection and cell handover.

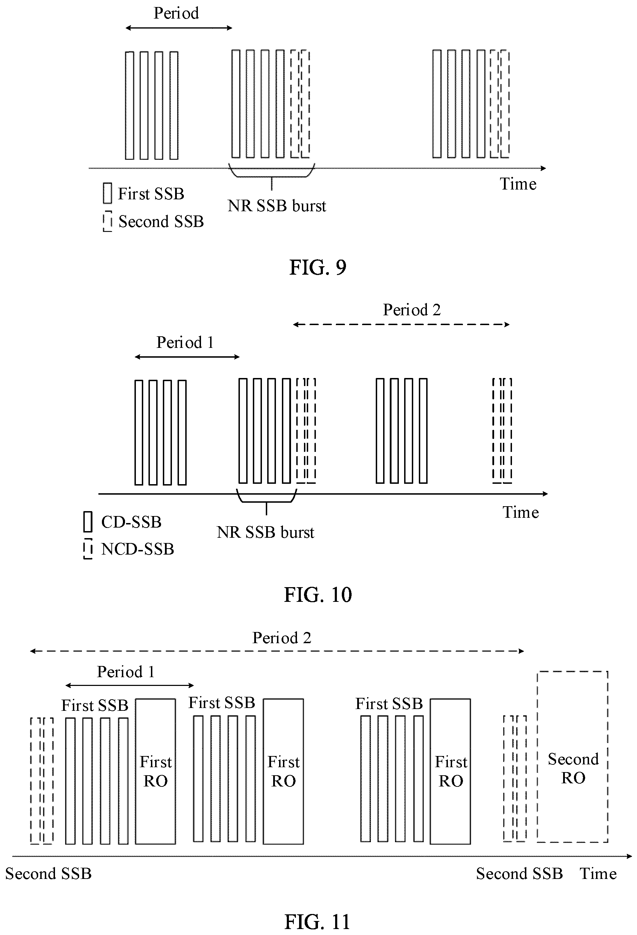

Optionally, in the method shown in FIG. 7A, sending time of the first SSB and sending time of the second SSB do not overlap. In other words, the first SSB and the second SSB are sent in a time division manner. For example, as shown in FIG. 9, when both the first SSB and the second SSB are the NR SSBs, both the first SSB and the second SSB are located in an NR SSB burst (burst), and the sending time of the first SSB and the sending time of the second SSB do not overlap. For another example, as shown in FIG. 10, when the first SSB is the CD-SSB, and the second SSB is the NCD-SSB, the first SSB is located in the NR SSB burst, and the second SSB is located outside the NR SSB burst.

According to the method, the first SSB and the second SSB do not overlap in time domain, so that interference between the first SSB and the second SSB can be reduced.

Optionally, in the method shown in FIG. 7A, the sending period of the first SSB is less than the sending period of the second SSB. For example, the sending period of the first SSB is one of the following: 5 ms, 10 ms, 20 ms, 40 ms, 80 ms, and 160 ms; and the sending period of the second SSB is several to hundreds of seconds. For example, as shown in FIG. 9, when both the first SSB and the second SSB are the NR SSBs, each NR SSB burst includes the first SSB, and some NR SSB bursts include the second SSB. In this way, the sending period of the second SSB is greater than the sending period of the first SSB. For another example, as shown in FIG. 10, when the first SSB is the CD-SSB, and the second SSB is the NCD-SSB, the sending period of the second SSB is a period 2, the sending period of the first SSB is a period 1, and the period 2 is greater than the period 1.

According to the method, the sending period of the first SSB is less than the sending period of the second SSB, so that overheads for sending the second SSB can be reduced.

Optionally, in the method shown in FIG. 7A, a first random access occasion (random access channel (random access channel, RACH) occasion, RO) associated with the first SSB is different from a second RO associated with the second SSB. The first RO is an access occasion associated with the first SSB, and the terminal device may perform, on the first RO, access related to initial random access, beam recovery, a data transmission request, or the like. The second RO is an access occasion associated with the second SSB, and the terminal device after group handover may perform access on the second RO. The RO may indicate a resource (for example, a time domain position and/or a time length) occupied for sending a random access preamble.

At least one of the following parameters of the first RO and the second RO is different:
1. A time domain period may indicate a period of a resource of an RO in time domain. Optionally, as shown in FIG. 11, in time domain, the first RO may be located after the associated first SSB, and a time domain period of the first RO may be the same as the sending period of the first SSB. In time domain, the second RO may be located after the associated second SSB, and a time domain period of the second RO may be the same as the sending period of the second SSB. For example, the sending period of the first SSB is the period 1, and the time domain period of the first RO is also the period 1; and/or the sending period of the second SSB is the period 2, and the time domain period of the second RO is also the period 2.
2. Duration may indicate a time length corresponding to a time domain resource of the RO. For example, a time length corresponding to a time domain resource of the first RO is 3 ms, that is, duration of the first RO is 3 ms; and a time length corresponding to a time domain resource of the second RO is 10 ms, that is, duration of the second RO is 10 ms.
3. A frequency domain position may indicate a position of the resource of the RO in frequency domain. A frequency domain position of the first RO and a frequency domain position of the second RO may partially overlap, or may not overlap.
4. A polarization mode may indicate a polarization mode corresponding to the RO, for example, left hand circular polarization, right hand circular polarization, elliptical polarization, or linear polarization. For example, a polarization mode corresponding to the first RO is the left hand circular polarization, and a polarization mode corresponding to the second RO is the right hand circular polarization.

Optionally, when the first cell sends the first SSB and the second SSB by using the method shown in FIG. 7A, the terminal device may perform handover by using the following process 1 or perform reselection by using the following process 2. Descriptions are separately provided below.

### Process 1:

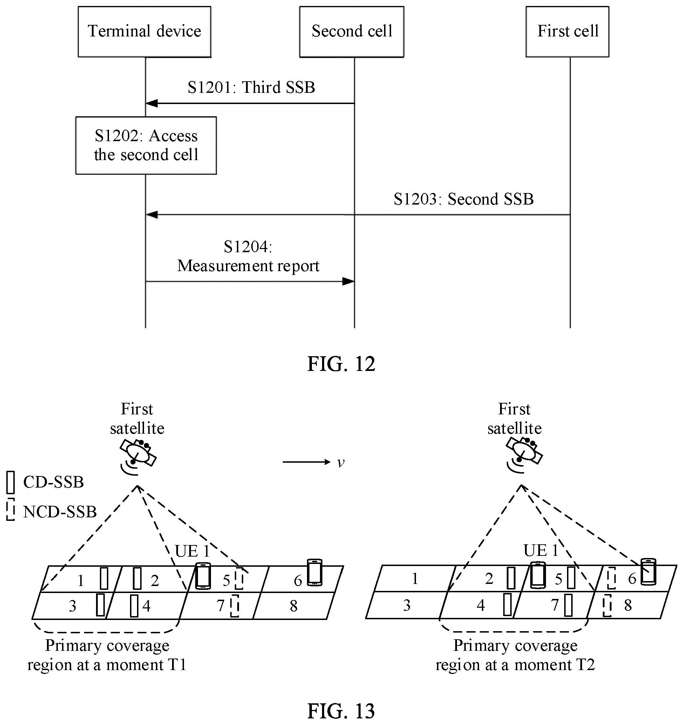

The following describes the method in the process 1 with reference to FIG. 12. The method includes the following steps.

S1201: The second cell sends a third SSB to the terminal device. Correspondingly, the terminal device receives the third SSB from the second cell.

The third SSB is an SSB used for initial access. For example, the third SSB may be used in an initial random access procedure. In addition, the third SSB may be further used in a procedure other than cell handover or cell reselection, for example, a procedure like beam failure recovery, uplink data transmission, or RRC connection reestablishment.

The second cell may be a cell of the second satellite. For specific content, refer to the description of the second cell in FIG. 7A. Details are not described herein again.

Optionally, the second cell may send the third SSB based on configuration information of the third SSB (referred to as third configuration information below). The third configuration information may include at least one of the following: a time domain length of the third SSB, a period of the third SSB, an SSB bitmap of the third SSB, a measurement window configuration of the third SSB, a measurement window offset of the third SSB, and a reference point location of the third SSB. For specific content of the third configuration information, refer to the descriptions of the first configuration information. The only difference is that the first SSB in the configuration information is replaced with the third SSB. Repeated parts are not described again.

The third configuration information may be preset, may be determined by the second cell, or may be set by another device (for example, a network device on the ground) for the second cell.

Optionally, the second cell may explicitly or implicitly indicate that the third SSB is the SSB used for initial access. For an indication manner, refer to the descriptions of "indicating that the first SSB is an SSB used for initial access" in S701. The only difference is that the first SSB is replaced with the third SSB. Details are not described herein again.

In addition, the third SSB is not used for cell handover or cell reselection. In this way, a terminal device that receives the third SSB does not hand over or reselect to the second cell based on the third SSB.

S1202: The terminal device accesses the second cell based on the third SSB.

Optionally, the terminal device may be the terminal device in the second region. For example, the second region may be included in the region in which the second cell sends the data signal. For specific content of the second region, refer to the descriptions of the second region in the method shown in FIG. 7A. Details are not described herein again.

A specific process in which the terminal device accesses the second cell based on the third SSB is not limited in this application. After accessing the second cell, the terminal device is in a connected state.

S1203: The first cell sends the second SSB. Correspondingly, the terminal device receives the second SSB from the first cell.

For specific content of S1203, refer to the descriptions of S702 in the method shown in FIG. 7A. Details are not described herein again.

S1204: The terminal device sends a measurement report to the second cell based on the second SSB.

Optionally, the terminal device may determine received signal quality of the first cell based on the second SSB. When the received signal quality of the first cell meets a specified reporting condition, the terminal device may send the measurement report to the second cell. The specified reporting condition may include that the signal quality of the first cell is greater than a specified signal quality threshold. The measurement report may include a sequence number of the second SSB and signal strength of the first cell received by the terminal device.

After receiving the measurement report, the second cell may determine to hand over the terminal device to the first cell, and hand over the terminal device from the second cell to the first cell by using the method shown in S605 to S608.

According to the method, the terminal device in the connected state may hand over to the first cell based on the second SSB. When all terminal devices in the connected state in the second region hand over to the first cell by using the method, efficiency of group handover can be improved.

Optionally, the method shown in FIG. 12 further includes step A1:
A1: The terminal device obtains the second configuration information.

The second configuration information indicates a configuration of sending the second SSB by the first cell. For specific content of the second configuration information, refer to S702. Details are not described herein again.

Optionally, when the second SSB is the NCD-SSB, the second configuration information may include the measurement window configuration of the second SSB, the measurement window offset of the second SSB, the reference point location of the second SSB, and the to-be-measured NCD-SSB set.

Optionally, the terminal device may obtain the second configuration information in one of the following manners:
Manner 1: The terminal device receives the second configuration information broadcast by the first cell.

The first cell may send the second configuration information by using a broadcast message. In this way, the terminal device obtains the second configuration information by using the broadcast message from the first cell.

Optionally, in the manner 1, an execution sequence of step A1 and S1201 and S1202 is not limited.

Manner 2: The terminal device may receive the second configuration information that is from the first cell and that is forwarded by the second cell.

The manner 2 may include steps B1 and B2.

B1: The first cell sends the second configuration information to the second cell.

Optionally, the first cell may send the configuration information to the second cell in at least one of the following cases:
Case 1: The first cell initially determines the configuration of sending the second SSB by the first cell. In this case, the second configuration information sent by the first cell to the second cell indicates the initially determined configuration of sending the second SSB by the first cell.
Case 2: The first cell updates the configuration of sending the second SSB by the first cell. In this case, the second configuration information sent by the first cell to the second cell indicates an updated configuration of sending the second SSB by the first cell.

Optionally, in the case 2, the first cell does not update the SIB 1 of the first cell.

B2: The second cell sends the second configuration information to the terminal device. Correspondingly, the terminal device receives the second configuration information from the second cell.

The second configuration information may be carried in an existing message, or may be carried in a new message. This is not limited in this application.

Optionally, in the manner 2, step A1 may be performed after S1202.

After step A1, S1203 may include: The terminal device receives the second SSB from the first cell based on the second configuration information. For example, when the second configuration information includes the measurement window configuration of the second SSB, the terminal device may receive the second SSB from the first cell in a time window indicated by the measurement window configuration. For another example, when the second configuration information includes the period of the second SSB, the terminal device detects the second SSB from the first cell by using the period of the second SSB as a period. For another example, the second SSB is an NCD-SSB. For another example, the terminal device may select an appropriate initial NCD-SSB based on a global navigation satellite system (global navigation satellite system, GNSS) location and a reference point location of the terminal device, and receive the initial NCD-SSB. For example, the terminal device may select the initial NCD-SSB based on a criterion of a shortest distance between a location of the terminal device and the reference point location or a criterion of a minimum included angle between a location of the terminal device, a location of the satellite, and the reference point location.

According to the method, the terminal device may receive the second SSB from the first cell based on the second configuration information, so that the terminal device can be prevented from blind detection for the second SSB. This can further reduce energy consumption of the terminal device.

Optionally, after S1204, the method shown in FIG. 12 further includes steps C1 and C2.

C1: The second cell sends a handover command to the terminal device. Correspondingly, the terminal device receives the handover command from the second cell.

The handover command may indicate the terminal device to hand over to the first cell. The handover command may be the second RRC reconfiguration message in S608. For specific content, refer to S608. Details are not described herein again.

C2: The terminal device receives the first SSB from the first cell.

In some possible manners, the terminal device may perform blind detection for the first SSB from the first cell, and access the first cell based on the detected first SSB.

In some other possible manners, the terminal device may receive the first SSB from the first cell based on the received second SSB. Optionally, the manner includes steps D1 and D2.

D1: The terminal device receives a first offset indication.

The first offset indication indicates a time offset between the sending time of the second SSB and the sending time of the first SSB adjacent to the second SSB. For example, if the sending time of the second SSB is T1, and the sending time of the first SSB adjacent to the second SSB is T2, the time offset indicated by the first offset indication is ΔT=T2-T1.

Optionally, the first offset indication may be indicated by adding a ΔT field to a message like an MIB, an SIB 1, or RRC. Alternatively, the first offset indication may be indicated by reusing a parameter K_SSB in the existing protocol. For example, a reserved bit in the parameter K_SSB includes the first offset indication. A unit of the time offset indicated by the first offset indication may be a symbol, a slot, a millisecond, a frame, or the like.

Optionally, the terminal device may receive the first offset indication in one of the following manners:

### Manner 1: The terminal device receives the first offset indication broadcast by the first cell.

The first cell may send the first offset indication by using a broadcast message. In this way, the terminal device obtains the first offset indication by using the broadcast message from the first cell.

Optionally, in the manner 1, an execution sequence of step D1 and S1201 to S1204 is not limited.

### Manner 2: The terminal device may receive the first offset indication that is from the first cell and that is forwarded by the second cell.

Optionally, the manner 2 may include steps E1 and E2.

E1: The first cell sends the first offset indication to the second cell. Correspondingly, the second cell receives the first offset indication from the first cell.

The first cell may send the first offset indication to the second cell through an interface between the first cell and the second cell.

E2: The second cell sends the first offset indication to the terminal device. Correspondingly, the terminal device receives the first offset indication.

The first offset indication may be carried in an existing message, or may be carried in a new message.

D2: The terminal device receives the first SSB from the first cell based on the first offset indication and time at which the second SSB is received. For example, the time offset indicated by the first offset indication is ΔT. If the terminal device receives the second SSB at a moment T3 in S1203, the terminal device may receive the first SSB from the first cell at a moment T3+ΔT.

The following describes steps D1 and D2 by using an example in which the first SSB is the CD-SSB and the second SSB is the NCD-SSB. The first cell may sequentially send the NCD-SSB and the CD-SSB in a same beam position. In the same beam position, there is a specific time domain offset between sending time of the NCD-SSB and sending time of the CD-SSB. For example, as shown in FIG. 13, at a moment T1, a beam that is sent by the first cell and that includes the NCD-SSB may cover beam positions 5 and 7, and a beam that is sent by the first satellite and that includes the CD-SSB may cover a beam position 1 to a beam position 4. At a moment T2, the beam that is sent by the first cell and that includes the NCD-SSB covers beam positions 6 and 8, and the beam that is sent by the first cell and that includes the CD-SSB covers the beam position 2, the beam position 4, the beam position 5, and the beam position 7. UE 1 is located in the beam position 5. At the moment T1, the UE 1 may measure the NCD-SSB from the first cell, and at the moment T2, the UE 1 may measure the CD-SSB from the first cell. Because there is the specific time domain offset between the sending time of the NCD-SSB and the sending time of the CD-SSB, the UE 1 may determine, based on time at which the NCD-SSB is received, expected time at which the CD-SSB is received.

According to the method, the terminal device may receive the first SSB from the first cell based on the first offset indication and the time at which the second SSB is received, so that the terminal device does not need to perform blind detection for the first SSB, and the second cell does not need to send the configuration information of the first SSB to the terminal device. This can further reduce the energy consumption of the terminal device, and reduce overheads for obtaining the configuration information of the first SSB.

Optionally, when the first SSB may be the CD-SSB, and the second SSB may be the NCD-SSB, the method shown in FIG. 12 further includes step D1.

D1: The terminal device communicates with the first cell by using a resource used for handover and/or a random access preamble used for handover that correspond/corresponds to the NCD-SSB.

In this application, the NCD-SSB may correspond to the resource used for handover and/or the random access preamble used for handover. A correspondence between the NCD-SSB and the resource used for handover and/or the random access preamble used for handover may be preset, or may be determined by a network device (for example, a first satellite or a network device located on the ground). When the correspondence is preset, the terminal device may store the correspondence. When the correspondence is determined by the network device, the terminal device may obtain the correspondence from the network device.

When the NCD-SSB corresponds to the resource used for handover, the terminal device may send a random access message to the first cell by using the resource. When the NCD-SSB corresponds to the random access preamble used for handover, the terminal device may send, to the first cell, the random access preamble corresponding to the NCD-SSB.

According to the method, the NCD-SSB may be associated with the dedicated handover resource and/or the random access preamble used for handover, and is used for uplink random access during group handover. This can further improve the efficiency of group handover. In addition, the handover resource associated with the NCD-SSB is used, so that the terminal device does not need to obtain resource configuration information used for group handover. This can further reduce overheads. The random access preamble associated with the NCD-SSB is used, so that a conflict between the random access preamble used for handover and a random access preamble used for initial access can be avoided. This further improves a success rate of group handover.

### Process 2:

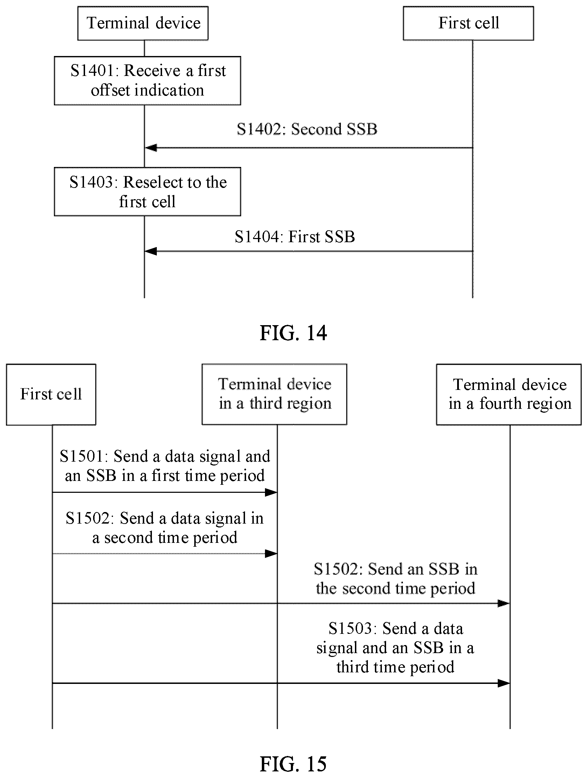

The following describes the method in the process 2 with reference to FIG. 14. The method includes the following steps.

S1401: The terminal device receives the first offset indication.

The first offset indication indicates the time offset between the sending time of the second SSB and the sending time of the first SSB adjacent to the second SSB.

For specific content of S1401, refer to the descriptions of step D1. Repeated parts are not described again.

In addition, the terminal device may be a terminal device in an idle state in the second region. For example, the second region may be included in the region in which the second cell sends the data signal. For specific content of the second region, refer to the descriptions of the second region in the method shown in FIG. 7A.

S1402: The first cell sends the second SSB. Correspondingly, the terminal device receives the second SSB from the first cell.

For specific content of S1402, refer to the descriptions of S702 in the method shown in FIG. 7A. Repeated parts are not described again.

S1403: The terminal device reselects to the first cell based on the second SSB.

A process in which the terminal device reselects to the first cell based on the second SSB is not limited in this application. For example, when the terminal device determines, based on the second SSB, that the signal quality from the first cell is greater than the specified signal quality threshold, the terminal device may reselect to the first cell.

In addition, a sequence of S1401 and S1402 and S1403 is not limited in this application.

S1404: The terminal device receives the first SSB from the first cell based on the time at which the second SSB is received and the first offset indication.

For specific content of S1404, refer to step D3. Repeated parts are not described again.

Optionally, when the terminal device is in the idle state, the terminal device may search for an SSB in a to-be-detected synchronization raster (synchronization raster). If the terminal device determines, in the explicit or the implicit manner in S701, that the received SSB is the first SSB, the terminal device may perform access and camping based on the first SSB.

According to the method, the terminal device in the idle state may reselect to the first cell based on the second SSB. When all terminal devices in the idle state in the second region reselect to the first cell by using the method, efficiency of group reselection can be improved.

In addition, according to the method, the terminal device may receive the first SSB from the first cell based on the first offset indication and the time at which the second SSB is received, so that the terminal device does not need to perform blind detection for the first SSB, and the second cell does not need to send the configuration information of the first SSB to the terminal device. This can further reduce the energy consumption of the terminal device, and reduce the overheads for obtaining the configuration information of the first SSB.

An embodiment of this application provides a communication method. The method may be applied to the communication system shown in FIG. 3 or FIG. 4. The following specifically describes a procedure of the method with reference to a flowchart shown in FIG. 15.

S1501: A first cell sends a data signal and an SSB in a third region in a first time period. Correspondingly, in the first time period, a terminal device in the third region may receive the data signal and the SSB from the first cell.

The first cell may be a cell in a coverage region of a first satellite, and the first satellite may cover at least one region.

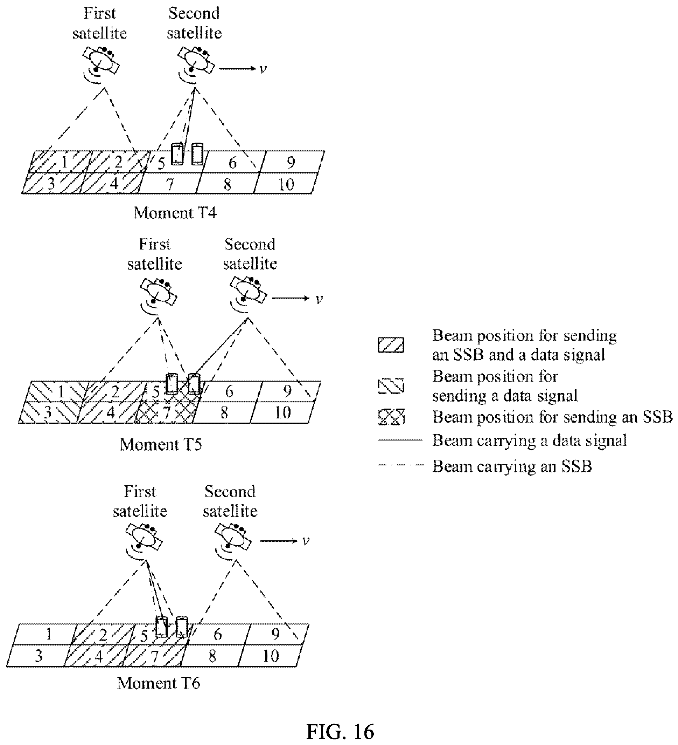

For example, as shown in FIG. 16, a moment T4 belongs to the first time period. At the moment T4, the first cell sends the data signal and the SSB in a beam position 1 to a beam position 4. In other words, a beam used to send the data signal and a beam used to send the SSB that are of the first cell may cover the beam position 1 to the beam position 4. The beam used to send the data signal may be referred to as a traffic beam. The beam used to send the SSB may be referred to as a broadcast beam. A second cell of a second satellite sends a data signal and an SSB in a beam position 5 to a beam position 8. In other words, a traffic beam and a broadcast beam of the second cell may cover the beam position 5 to the beam position 8. The first satellite and the second satellite move to the right.

Optionally, in the method shown in FIG. 15, the SSB may be an NR SSB, or may be a CD-SSB. The SSB may be used for initial access and cell reselection or cell handover.

In addition, in the method shown in FIG. 15, beams of different satellites do not overlap at a beam position level.

S1502: The first cell sends a data signal in the third region, and sends an SSB in a fourth region in a second time period. Correspondingly, in the second time period, the terminal device in the third region may receive the data signal from the first cell, and a terminal device in the fourth region may receive the SSB from the first cell.

The second time period is a time period after the first time period. For example, the first time period is 0 to 5 seconds (s), and the second time period is 6 to 11 seconds.

For example, as shown in FIG. 16, a moment T5 belongs to the second time period. At the moment T5, the first cell sends the data signal in the beam position 1 to the beam position 4, and sends the SSB in the beam position 2, the beam position 4, the beam position 5, and the beam position 7. The second cell sends the data signal in the beam position 5 to the beam position 8, and sends the SSB in the beam position 6, the beam position 8, a beam position 9, and a beam position 10. In this way, terminal devices in the beam position 5 and the beam position 7 may hand over or reselect to the first cell.

S1503: The first cell sends a data signal and an SSB in the fourth region in a third time period. Correspondingly, in the third time period, the terminal device in the fourth region may receive the data signal and the SSB from the first cell.

The third time period is a time period after the second time period. For example, the second time period is 6s to 11s, and the third time period is 12s to 17s. Start time of the third time period may be time at which a specified proportion of terminal devices in the fourth region complete cell handover or cell reselection. The specified proportion is, for example, 1/3.

For example, as shown in FIG. 16, a moment T6 belongs to the third time period. At the moment T6, the first cell sends the data signal and the SSB in the beam position 2, the beam position 4, the beam position 5, and the beam position 7. The second cell of the second satellite sends the data signal and the SSB in the beam position 6, the beam position 8, the beam position 9, and the beam position 10.

According to the method, before sending the data signal in the fourth region, the first cell may first send the SSB in the fourth region. In this way, in a beam hopping system, before the first cell covers the fourth region by using the beam used to send the data signal, the terminal device located in the fourth region may perform broadcast signal quality measurement and downlink synchronization based on the SSB, so that when the first cell covers the fourth region by using the beam used to send the data signal, the terminal device can seamlessly reselect or hand over to the first cell. This improves efficiency of cell reselection and cell handover.

Optionally, in the method shown in FIG. 15, the terminal device may determine, in Implementation 1 or Implementation 2, a correspondence between time and a region at and in which the first cell sends a signal.

Implementation 1: The terminal device separately obtains third configuration information and fourth configuration information. The third configuration information indicates a correspondence between time and a region at and in which the first satellite sends a data signal, and the fourth configuration information indicates a correspondence between time and a region at and in which the first satellite sends an SSB.

Optionally, the implementation 1 may include steps F1 to F4.

F1: The first cell sends the third configuration information. Correspondingly, the terminal device receives the third configuration information.

The first cell directly sends the third configuration information to the terminal device. For example, the terminal device is located in the beam position 2, and the first cell may send the third configuration information by using a broadcast message, or send the third configuration information to a terminal device in a connected state by using a unicast message.

Alternatively, the first cell may send the third configuration information to the terminal device through another cell. For example, the terminal device is located in the beam position 5, and the first cell forwards the third configuration information to the terminal device through the second cell of the second satellite.

Optionally, the third configuration information may indicate a correspondence between time and a region at and in which the first satellite currently sends a data signal. For example, the current time is the moment T4, the moment T4 belongs to the first time period, and the third configuration information includes indication information of the first time period and indication information of the third region. This indicates that the first cell may send the data signal in the third region in the first time period. The information indicating the first time period may be specific time information, for example, 0 to 5 seconds. Alternatively, the information indicating the first time period may be start time and duration of the first time period. For example, the start time is 0 seconds, and the duration is 5 seconds. The indication information of the third region may be an identifier of the third region or an identifier of a beam position in the third region.

The third configuration information may further indicate a correspondence between time and a region at and in which the first satellite sends a data signal in a current time period and a future time period. For example, the current time is the moment T4, the moment T4 belongs to the first time period, and the third configuration information includes indication information of the first time period and indication information of the third region, indication information of the second time period and indication information of the third region, and indication information of the third time period and indication information of the fourth region. This indicates that the first cell may send the data signal in the third region in the first time period and the second time period, and in the third time period, the first cell may send the data signal in the fourth region. For specific content of the indication information of the second time period and the indication information of the third time period, refer to the descriptions of the information indicating the first time period. For the indication information of the fourth region, refer to the descriptions of the indication information of the third region.

F2: The terminal device receives the data signal from the first cell based on the third configuration information.

The terminal device may receive the data signal from the first cell in the corresponding region in the time period indicated by the third configuration information. The following uses an example in which the third configuration information includes the indication information of the first time period and the indication information of the third region for description. If the third configuration information received by the terminal device includes the indication information of the first time period and the indication information of the third region, the terminal device may receive the data signal from the first cell in the third region in the first time period.

F3: The first cell sends the fourth configuration information. Correspondingly, the terminal device receives the fourth configuration information.

For a manner in which the terminal device receives the fourth configuration information, refer to step F1. The only difference is that the third configuration information is replaced with the fourth configuration information, and the data signal is replaced with the SSB.

Optionally, the fourth configuration information may indicate a correspondence between time and a region at and in which the first satellite currently sends an SSB. For example, the current time is the moment T4, the moment T4 belongs to the first time period, and the fourth configuration information includes indication information of the first time period and indication information of the third region. This indicates that the first cell may send the SSB in the third region in the first time period. For the information indicating the first time period and the indication information of the third region, refer to step F1. Details are not described herein again.

The fourth configuration information may further indicate a correspondence between time and a region at and in which the first satellite sends an SSB in a current time period and a future time period. For example, the current time is the moment T4, the moment T4 belongs to the first time period, and the fourth configuration information includes indication information of the first time period and indication information of the third region, indication information of the second time period and indication information of the fourth region, and indication information of the third time period and the indication information of the fourth region. This indicates that the first cell may send the SSB in the third region in the first time period, and the first cell sends the SSB in the fourth region in the second time period and the third time period. For specific content of the indication information of the second time period and the indication information of the third time period, refer to the descriptions of the information indicating the first time period. For the indication information of the fourth region, refer to the descriptions of the indication information of the third region.

F4: The terminal device receives the SSB from the first cell based on the fourth configuration information.

The terminal device may receive the SSB from the first cell in the corresponding region in the time period indicated by the fourth configuration information. The following uses an example in which the fourth configuration information includes the indication information of the first time period and the indication information of the third region for description. If the fourth configuration information received by the terminal device includes the indication information of the first time period and the indication information of the third region, the terminal device may receive the SSB from the first cell in the third region in the first time period.

A sequence of steps F1 and F2 and steps F3 and F4 is not limited in this application.

Optionally, the terminal device may further determine, based on the third configuration information and the fourth configuration information, time (referred to as service time for short below) at which the first cell can provide a service for the terminal device. The terminal device does not detect a signal from the first cell beyond the service time. For example, as shown in FIG. 16, the terminal device is located in the beam position 5. The third configuration information indicates the first cell to send the data signal in the beam position 1 to the beam position 4 in 0 to 5 seconds. The fourth configuration information indicates the first cell to send the SSB in the beam position 1 to the beam position 4 in 0 to 5 seconds, and sends the SSB in the beam position 2, the beam position 4, the beam position 5, and the beam position 7 in 6 to 11 seconds. In this case, the terminal device may determine that the first cell does not provide a service for the terminal device in 0 to 6 seconds, and the terminal device does not detect a signal from the first cell in the time period. According to the method, the power consumption of the terminal device can be reduced.

Implementation 2: The terminal device obtains fifth configuration information and a second offset indication. The fifth configuration information indicates a correspondence between time and a region at and in which the first satellite sends a first signal, and the second offset indication indicates a time interval between time at which the first satellite sends the first signal in the third region or the fourth region and time at which the first satellite sends a second signal. The first signal is a data signal, and the second signal is an SSB; or the first signal is an SSB, and the second signal is a data signal.

Optionally, the implementation 2 may include steps G1 to G4.

G1: The first cell sends the fifth configuration information. Correspondingly, the terminal device receives the fifth configuration information.

When the first signal is the data signal, the fifth configuration information may be the third configuration information in step F1. For step G1, refer to step F1. When the first signal is the SSB, the fifth configuration information may be the fourth configuration information in step F3. For step G2, refer to step F3.

G2: The terminal device receives the first signal from the first cell based on the fifth configuration information.

When the first signal is the data signal, for step G2, refer to step F2. When the first signal is the SSB, for step G2, refer to step F4.

G3: The first cell sends the second offset indication. Correspondingly, the terminal device receives the second offset indication.

The first cell directly sends the second offset indication to the terminal device. For example, the terminal device is located in the beam position 2, and the first cell may send the second offset indication by using a broadcast message, or send the second offset indication to a terminal device in a connected state by using a unicast message.

Alternatively, the first cell may send the second offset indication to the terminal device through another cell. For example, the terminal device is located in the beam position 5, and the first cell forwards the second offset indication to the terminal device through the second cell of the second satellite.

G4: The terminal device receives the second signal from the first cell based on the fifth configuration information and the second offset indication.

The following uses an example in which the first signal is the SSB and the second signal is the data signal for description. For example, the fifth configuration information includes indication information of the second time period and indication information of the fourth region. If the second time period is 6 to 11 seconds, and a time offset indicated by the second offset indication is 6 seconds, the terminal device may determine to receive the data signal from the first cell in the fourth region in 12 to 17 seconds.

In this implementation, the terminal device may determine, based on configuration information of the first signal and the second offset indication, time for receiving the second signal, and does not need to receive configuration information of the second signal. This can further reduce overheads.

Optionally, similar to the implementation 1, the terminal device may also determine, based on the fifth configuration information and the second offset indication, time (referred to as service time for short below) at which the first cell can provide a service for the terminal device. The terminal device does not detect a signal from the first cell beyond the service time. According to the method, the power consumption of the terminal device can be reduced.

Optionally, the method shown in FIG. 15 further includes steps H1 and H2.

H1: The first cell sends indication information used for a fourth time period. Correspondingly, the terminal device receives the indication information used for the fourth time period.

In the fourth time period, a first transmit beam of the first cell may be paired with a first receive beam of the terminal device. In other words, the fourth time period is a time period in which the first transmit beam and the first receive beam are paired.

The first cell may directly send the indication information of the fourth time period to the terminal device. For example, the terminal device is located in the beam position 2, and the first cell may send the indication information of the fourth time period by using a broadcast message, or send the indication information of the fourth time period to a terminal device in a connected state by using a unicast message.

Alternatively, the first cell may send the indication information of the fourth time period to the terminal device through another cell. For example, the terminal device is located in the beam position 5, and the first cell forwards the indication information of the fourth time period to the terminal device through the second cell of the second satellite.

In addition, for specific content of the indication information of the fourth time period, refer to the indication information of the first time period in step F1, and the only difference is that the first time period is replaced with the fourth time period. Details are not described herein again.

G2: In the fourth time period, the terminal device may receive the data signal and/or the SSB from the first cell by using the first receive beam.

According to the method, the terminal device receives the data signal and/or the SSB from the first cell by using the first receive beam in the fourth time period indicated by the first cell. In the fourth time period, the first receive beam is paired with the first transmit beam of the first cell. Therefore, communication quality can be improved in the method. In addition, according to the method, the terminal device does not need to detect a beam that can be paired with the transmit beam of the first cell. This can further improve communication efficiency.

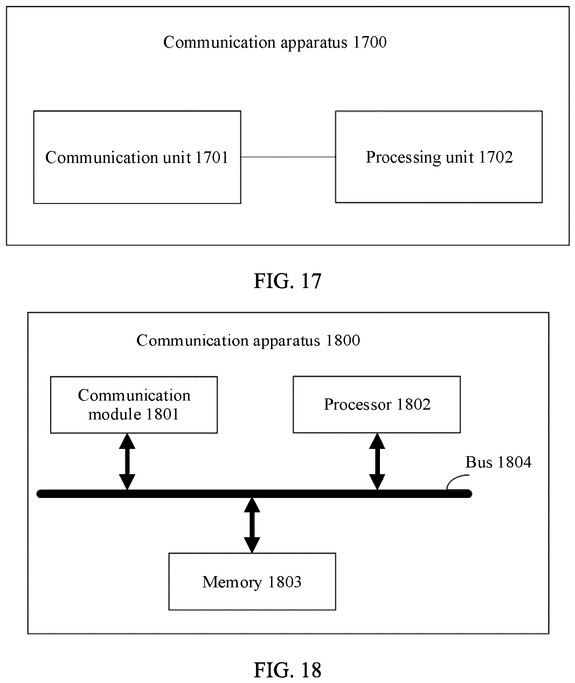

Based on a same technical concept as the method embodiments in FIG. 7A to FIG. 16, an embodiment of this application provides a communication apparatus shown in FIG. 17, and the communication apparatus may be configured to perform functions of related steps in the foregoing method embodiments. The function may be implemented by hardware, or may be implemented by software or by hardware executing corresponding software. The hardware or the software includes one or more modules corresponding to the function. A structure of the communication apparatus is shown in FIG. 17, and includes a communication unit 1701 and a processing unit 1702. The communication apparatus 1700 may be used in the network device, the satellite, or the terminal device in the communication system shown in FIG. 3 or FIG. 4, and may implement the communication method provided in the foregoing embodiments and instances of this application. The following describes functions of the units in the communication apparatus 1700.

The communication unit 1701 is configured to receive and send data. The communication unit 1701 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1702 may be configured to support the communication apparatus 1700 in performing a processing action in the foregoing method embodiments. The processing unit 1702 may be implemented by a processor. The processor may be a central processing unit (central processing unit, CPU), may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor or any conventional processor.

In an implementation, the communication apparatus 1700 is used in the network device or the satellite in the communication system shown in FIG. 3 or FIG. 4. The following describes specific functions of the processing unit 1702 in this implementation.

The processing unit 1702 is configured to: send a first SSB by using the communication unit 1701, where the first SSB is an SSB used for initial access; and send a second SSB by using the communication unit 1701, where the second SSB is an SSB used for cell handover or cell reselection.

Optionally, the first SSB is not used for cell handover or cell reselection, and the second SSB is not used for initial access.

Optionally, the processing unit 1702 is specifically configured to: send the first SSB in a first region by using the communication unit 1701; and send the second SSB in a second region by using the communication unit 1701.

Optionally, the processing unit 1702 is specifically configured to send configuration information to a second cell by using the communication unit 1701, where the configuration information indicates a configuration of sending the second SSB by the first cell.

Optionally, sending time of the first SSB and sending time of the second SSB do not overlap.

Optionally, a sending period of the first SSB is less than a sending period of the second SSB.

Optionally, both the first SSB and the second SSB are NR SSBs.

Optionally, the first SSB is a CD-SSB, and the second SSB is an NCD-SSB.

Optionally, the NCD-SSB corresponds to a resource used for handover and/or a random access preamble used for handover.

Optionally, the processing unit 1702 is specifically configured to send a first offset indication to the second cell by using the communication unit 1701, where the first offset indication indicates a time offset between the sending time of the second SSB and the sending time of the first SSB adjacent to the second SSB.

Optionally, the processing unit 1702 is specifically configured to: update the configuration of sending the second SSB by the first cell, and skip updating a system information block SIB of the first cell.

In another implementation, the communication apparatus 1700 is used in the terminal device in the communication system shown in FIG. 3 or FIG. 4. The following describes specific functions of the processing unit 1702 in this implementation.

The processing unit 1702 is configured to: receive a third SSB from a second cell by using the communication unit 1701, where the third SSB is an SSB used for initial access; access the second cell based on the third SSB; receive a second SSB from a first cell by using the communication unit 1701, where the second SSB is an SSB used for cell handover or cell reselection; and send a measurement report to the second cell based on the second SSB by using the communication unit 1701.

Optionally, the processing unit 1702 is specifically configured to: receive configuration information from the second cell by using the communication unit 1701, where the configuration information indicates a configuration of sending the second SSB by the first cell; and receive the second SSB from the first cell based on the configuration information by using the communication unit 1701.

Optionally, the second SSB is an NCD-SSB, and the processing unit 1702 is specifically configured to communicate, by using the communication unit 1701, with the first cell by using a resource used for handover and/or a random access preamble used for handover that correspond/corresponds to the NCD-SSB.

Optionally, the processing unit 1702 is specifically configured to: receive a handover command from the second cell by using the communication unit 1701, where the handover command indicates the terminal device to hand over to the first cell; and receive a first SSB from the first cell by using the communication unit 1701, where the first SSB is an SSB used for initial access.

Optionally, the processing unit 1702 is specifically configured to: receive a first offset indication by using the communication unit 1701, where the first offset indication indicates a time interval between sending time of the second SSB and sending time of the first SSB adjacent to the second SSB; and receive, by using the communication unit 1701, the first SSB from the first cell based on the first offset indication and time at which the second SSB is received.

Optionally, the first SSB is not used for cell handover or cell reselection, and the second SSB is not used for initial access.

Optionally, the sending time of the first SSB and the sending time of the second SSB do not overlap.

Optionally, a sending period of the first SSB is less than a sending period of the second SSB.

Optionally, both the first SSB and the second SSB are NR SSBs.

Optionally, the first SSB is a CD-SSB, and the second SSB is an NCD-SSB.

In still another implementation, the communication apparatus 1700 is used in the terminal device in the communication system shown in FIG. 3 or FIG. 4. The following describes specific functions of the processing unit 1702 in this implementation.

The processing unit 1702 is configured to: receive a second SSB from a first cell by using the communication unit 1701, where the second SSB is an SSB used for cell handover or cell reselection; receive a first offset indication by using the communication unit 1701, where the first offset indication indicates a time offset between sending time of the second SSB and sending time of a first SSB adjacent to the second SSB, and the first SSB is an SSB used for initial access; reselect to the first cell based on the second SSB; and receive, by using the communication unit 1701, the first SSB from the first cell based on time at which the second SSB is received and the first offset indication.

Optionally, the first SSB is not used for cell handover or cell reselection, and the second SSB is not used for initial access.

Optionally, the sending time of the first SSB and the sending time of the second SSB do not overlap.

Optionally, a sending period of the first SSB is less than a sending period of the second SSB.

Optionally, both the first SSB and the second SSB are NR SSBs.

Optionally, the first SSB is a CD-SSB, and the second SSB is an NCD-SSB.

It should be noted that, in the foregoing embodiments of this application, division into the modules is an example, is merely logical function division, and may be other division in an actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium, and includes several instructions for instructing a computer device (which may be a personal computer, a server, or a network device) or a processor (processor) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 18, and the communication apparatus may be configured to perform related steps in the foregoing method embodiments. The communication apparatus may be used in the network device, the satellite, or the terminal device in the communication system shown in FIG. 3 or FIG. 4, may implement the communication method provided in the foregoing embodiments and instances of this application, and has the functions of the communication apparatus shown in FIG. 17. As shown in FIG. 18, the communication apparatus 1800 includes a communication module 1801, a processor 1802, and a memory 1803. The communication module 1801, the processor 1802, and the memory 1803 are connected to each other.

Optionally, the communication module 1801, the processor 1802, and the memory 1803 are connected to each other through a bus 1804. The bus 1804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, only one thick line indicates the bus in FIG. 18, but this does not mean that there is only one bus or only one type of bus.

The communication module 1801 is configured to receive and send data, to implement communication and interaction with another device. For example, the communication module 1801 may be implemented through a physical interface, a communication module, a communication interface, or an input/output interface.

The processor 1802 may be configured to support the communication apparatus 1800 in performing a processing action in the foregoing method embodiments. When the communication apparatus 1800 is configured to implement the foregoing method embodiment, the processor 1802 may be further configured to implement the functions of the processing unit 1702. The processor 1802 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 1800 is used in the network device or the satellite in the communication system shown in FIG. 3 or FIG. 4. The processor 1802 is specifically configured to: send a first SSB by using the communication module 1801, where the first SSB is an SSB used for initial access; and send a second SSB by using the communication module 1801, where the second SSB is an SSB used for cell handover or cell reselection.

In another implementation, the communication apparatus 1800 is used in the terminal device in the communication system shown in FIG. 3 or FIG. 4. The processor 1802 is specifically configured to: receive a third SSB from a second cell by using the communication module 1801, where the third SSB is an SSB used for initial access; access the second cell based on the third SSB; receive a second SSB from a first cell by using the communication module 1801, where the second SSB is an SSB used for cell handover or cell reselection; and send a measurement report to the second cell based on the second SSB by using the communication module 1801.

In still another implementation, the communication apparatus 1800 is used in the terminal device in the communication system shown in FIG. 3 or FIG. 4. The processor 1802 is specifically configured to: receive a second SSB from a first cell by using the communication module 1801, where the second SSB is an SSB used for cell handover or cell reselection; receive a first offset indication by using the communication module 1801, where the first offset indication indicates a time offset between sending time of the second SSB and sending time of a first SSB adjacent to the second SSB, and the first SSB is an SSB used for initial access; reselect to the first cell based on the second SSB; and receive, by using the communication module 1801, the first SSB from the first cell based on time at which the second SSB is received and the first offset indication.

For specific functions of the processor 1802, refer to the descriptions in the communication method provided in the foregoing embodiments and instances of this application, and the specific function descriptions of the communication apparatus 1700 in the embodiment of this application shown in FIG. 17. Details are not described herein again.

The memory 1803 is configured to store program instructions, data, and the like. Specifically, the program instructions may include program code, and the program code includes computer operation instructions. The memory 1803 may include a RAM, and may further include a non-volatile memory (non-volatile memory), for example, at least one disk memory. The processor 1802 executes the program instructions stored in the memory 1803, and uses the data stored in the memory 1803, to implement the foregoing function, so as to implement the communication method provided in the foregoing embodiments of this application.

It may be understood that the memory 1803 in FIG. 18 of this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example but not a limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, another optical disc storage, a disk storage medium, another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, a first cell may send a first SSB, where the first SSB is an SSB used for initial access. The first cell may further send a second SSB, where the second SSB is an SSB used for cell handover or cell reselection. According to the method, the first cell may separately send the first SSB used for initial access and the second SSB used for cell handover or cell reselection. In this way, when a terminal device needs to access the first cell, the first cell may send the first SSB; and when the terminal device needs to hand over or reselect to the first cell, the first cell may send the second SSB, so that the SSB may be sent based on a requirement. This reduces overheads for sending the SSB and improves efficiency of measuring the SSB by the terminal device.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a first cell, and comprising:
sending a first synchronization signal block SSB, wherein the first SSB is an SSB used for initial access; and
sending a second SSB, wherein the second SSB is an SSB used for cell handover or cell reselection.

2. The method according to claim 1, wherein the first SSB is not used for cell handover or cell reselection, and the second SSB is not used for initial access.

3. The method according to claim 1 or 2, wherein the sending a first SSB comprises: sending the first SSB in a first region; and
the sending a second SSB comprises: sending the second SSB in a second region.

4. The method according to any one of claims 1 to 3, wherein the method further comprises:
sending configuration information to a second cell, wherein the configuration information indicates a configuration of sending the second SSB by the first cell.

5. The method according to any one of claims 1 to 4, wherein sending time of the first SSB and sending time of the second SSB do not overlap.

6. The method according to any one of claims 1 to 5, wherein a sending period of the first SSB is less than a sending period of the second SSB.

7. The method according to any one of claims 1 to 6, wherein both the first SSB and the second SSB are new radio NR SSBs.

8. The method according to any one of claims 1 to 7, wherein the first SSB is a cell-defining synchronization signal block CD-SSB, and the second SSB is a non-cell-defining synchronization signal block NCD-SSB.

9. The method according to claim 8, wherein the NCD-SSB corresponds to a resource used for handover and/or a random access preamble used for handover.

10. The method according to any one of claims 1 to 9, wherein the method further comprises:
sending a first offset indication to the second cell, wherein the first offset indication indicates a time offset between the sending time of the second SSB and the sending time of the first SSB adjacent to the second SSB.

11. The method according to any one of claims 1 to 10, wherein the method further comprises:
updating the configuration of sending the second SSB by the first cell, and skipping updating a system information block SIB of the first cell.

12. A communication method, applied to a terminal device, and comprising:
receiving a third synchronization signal block SSB from a second cell, wherein the third SSB is an SSB used for initial access;
accessing the second cell based on the third SSB;
receiving a second SSB from a first cell, wherein the second SSB is an SSB used for cell handover or cell reselection; and
sending a measurement report to the second cell based on the second SSB.

13. A communication method, applied to a terminal device, and comprising:
receiving a second synchronization signal block SSB from a first cell, wherein the second SSB is an SSB used for cell handover or cell reselection;
receiving a first offset indication, wherein the first offset indication indicates a time offset between sending time of the second SSB and sending time of a first SSB adjacent to the second SSB, and the first SSB is an SSB used for initial access;
reselecting to the first cell based on the second SSB; and
receiving the first SSB from the first cell based on time at which the second SSB is received and the first offset indication.

14. The method according to claim 12, wherein the method further comprises:
receiving configuration information from the second cell, wherein the configuration information indicates a configuration of sending the second SSB by the first cell; and
the receiving a second SSB from a first cell comprises: receiving the second SSB from the first cell based on the configuration information.

15. The method according to claim 12 or 14, wherein the second SSB is an NCD-SSB, and the method further comprises:
communicating with the first cell by using a resource used for handover and/or a random access preamble used for handover that correspond/corresponds to the NCD-SSB.

16. The method according to claim 12, 14, or 15, wherein the method further comprises:
receiving a handover command from the second cell, wherein the handover command indicates the terminal device to hand over to the first cell; and
receiving a first SSB from the first cell, wherein the first SSB is an SSB used for initial access.

17. The method according to claim 16, wherein the method further comprises:
receiving a first offset indication, wherein the first offset indication indicates a time interval between sending time of the second SSB and sending time of the first SSB adjacent to the second SSB; and
the receiving a first SSB from the first cell comprises: receiving the first SSB from the first cell based on the first offset indication and time at which the second SSB is received.

18. The method according to claim 13, 16, or 17, wherein the first SSB is not used for cell handover or cell reselection, and the second SSB is not used for initial access.

19. The method according to any one of claims 13 and 16 to 18, wherein the sending time of the first SSB and the sending time of the second SSB do not overlap.

20. The method according to any one of claims 13 and 16 to 19, wherein a sending period of the first SSB is less than a sending period of the second SSB.

21. The method according to any one of claims 13 and 16 to 20, wherein both the first SSB and the second SSB are new radio NR SSBs.

22. The method according to any one of claims 13 and 16 to 21, wherein the first SSB is a cell-defining synchronization signal block CD-SSB, and the second SSB is a non-cell-defining synchronization signal block NCD-SSB.

23. A communication apparatus, comprising a processor and a memory, wherein the processor is coupled to the memory, and the processor is configured to execute computer program instructions stored in the memory, to implement the method according to any one of claims 1 to 11.

24. A computer-readable storage medium, wherein the computer-readable storage medium stores a computer program, and when the computer program is run on a computer, the method according to any one of claims 1 to 11 is implemented.

25. A chip, wherein the chip is coupled to a memory, and the chip reads a computer program stored in the memory, to implement the method according to any one of claims 1 to 11.
